# EUROPEAN PATENT APPLICATION

(11) **EP 2 535 948 A1**
(43) Date of publication of application: **19.12.2012**
(21) Application number: 11742307.9
(22) Date of filing: 10.02.2011
(51) Int. Cl.: H01L 31/042

(54) **STRUCTURE-SUPPORTING STRUCTURE, FRAME FOR STRUCTURE, METHOD FOR CONSTRUCTING STRUCTURE USING SAID FRAME, AND SOLAR POWER GENERATING SYSTEM**

(30) Priority: 19.08.2010 JP 2010184396; 12.02.2010 JP 2010028361
(71) Applicant: Sharp Kabushiki Kaisha, Osaka-shi, Osaka 545-8522 (JP)
(72) Inventor: SAGAYAMA, Kenichi, Osaka-shi Osaka 545-8522 (JP)
(74) Representative: Müller - Hoffmann & Partner
(86) International application number: PCT/JP2011/052883
(87) International publication number: WO 2011/099564

(57) **Abstract**

A structural object supporting structure that supports a structural object of the present invention includes: a cross-piece on which an end of the structural object is placed; a guiding support portion disposed on the cross-piece; and a stopper provided on one end side of the guiding support portion, wherein the guiding support portion includes a fitting groove extending parallel to the cross-piece, and the end of the structural object is provided with a fitting portion that is inserted into the fitting groove of the guiding support portion from one open end of the fitting groove to abut the stopper by being slid in the longitudinal direction of the cross-piece.

## Description

### Technical Field

The present invention relates to a structural object supporting structure and a structural object mount for supporting a structural object such as a solar cell module, a method for installing a structural object using the mount, and a solar photovoltaic system.

### Background Art

In a solar photovoltaic system, a solar cell module, which is a structural object, is fixed and supported onto a mount. One example of such a mount is a mount having a structure in which a plurality of cross-pieces are arranged parallel and fixed, and a plurality of solar cell modules are supported, spanning between the cross-pieces.

In the case of this mount, end portions of the solar cell modules need to be fixed on the respective corresponding cross-pieces. In general, a plurality of locations of the end portions of the solar cell modules are screwed, and this screwing operation is troublesome.

For this reason, according to the technique disclosed in Patent Document 1, fixing hooks are provided on a plurality of locations on the respective corresponding cross-pieces, and engaging recesses are formed in a plurality of locations of the frames of solar cell modules. The solar cell modules are fixed by engaging the engaging recesses of the frames of the solar cell modules with the fixing hooks on the cross-pieces, and thereby, the operation is simplified.

### Prior Art Document

### Patent Document

[Patent Document 1] JP H9-235844A

### Summary of Invention

### Problems to be Solved by the Invention

However, with the technique of Patent Document 1, the engaging recess of the frames of the solar cell modules are engaged with the fixing hooks on the cross-pieces by moving the solar cell modules on the inclined face of a roof or the like, downward in the direction of inclination. The operation of moving the solar cell modules, which are heavy objects, downward in the direction of inclination is difficult and dangerous. In particular, the engaging recesses of the frames of the solar cell modules, in some cases, may not be engaged with the fixing hooks by moving the solar cell modules downward in the direction of inclination. In that case, there is the possibility that the solar cell modules slip off under their own weight, which increases the danger of the operation.

With the technique of Patent Document 1, a plurality of cross-pieces and a plurality of supporting members are combined in parallel crosses to construct a mount for the solar cell modules. Further, the solar cell modules themselves are reinforced with frames, thus providing sufficient strength to both the mount and the solar cell modules. However, this results in a great increase in the number of parts of the solar photovoltaic system as a whole.

The present invention was made in view of the above-described conventional problems, and it is an object of the invention to provide a structural object supporting structure and a structural object mount that allow easy and safe mounting of a structural object such as a solar cell module, a method for installing a structural object using the mount, and a solar photovoltaic system.

### Means for Solving the Problems

In order to solve the above-described problems, a structural object supporting structure according to the present invention is a structural object supporting structure that supports a structural object, including: a cross-piece on which an end of the structural object is placed; a guiding support portion disposed on the cross-piece; and a stopper provided on one end side of the guiding support portion, wherein the guiding support portion includes a fitting groove extending parallel to the cross-piece, and the end of the structural object is provided with a fitting portion that is inserted into the fitting groove of the guiding support portion from one open end of the fitting groove to abut the stopper by being slid in the longitudinal direction of the cross-piece.

With this structural object supporting structure, when an end of the structural object is slid on the cross-piece, the fitting portion of the structural object is inserted and fitted into the fitting groove of the guiding support portion to abut the stopper. Accordingly, the fitting portion of the structural object can be easily fitted into the fitting groove of the guiding support portion.

For example, the stopper may be provided in the guiding support portion.

In the structural object supporting structure of the present invention, the end of the structural object may be provided with an abutting portion that abuts the cross-piece so as to position the fitting portion of the structural object with respect to the fitting groove of the guiding support portion.

When the abutting portion is abutted against the cross-piece, the position of the fitting portion of the structural object with respect to the fitting groove of the guiding support portion is set, and therefore the fitting portion can easily be fitted into the fitting groove. In addition, the movement of the structural object is restricted, and therefore the operation safety is increased.

For example, it is preferable that the abutting portion abuts a corner portion of the cross-piece.

In the case where the abutting portion of the structural object abuts a corner portion of the cross-piece in this manner, the movement of the structural object is restricted in two directions, and it is therefore possible to achieve higher operation efficiency and enhanced safety.

In the structural object supporting structure of the present invention, wherein the guiding support portion may be provided with a positioning wall against which the end of the structural object is abutted so as to position the fitting portion of the structural object with respect to the fitting groove of the guiding support portion.

With the positioning wall of the guiding support portion as well, the position of the fitting portion of the structural object with respect to the fitting groove of the guiding support portion is set, and therefore the fitting portion can be easily fitted into the fitting groove and the movement of the structural object is restricted, which increases the operation safety.

Furthermore, in the structural object supporting structure of the present invention, the fitting groove of the guiding support portion may be provided with an elastic projection that comes into contact with and retracts from an end portion of the structural object inserted into the fitting groove so as to allow passage of the end portion of the structural object, and that returns after passage of the end portion of the structural object so as to prevent the end portion of the structural object from moving in a direction opposite to the direction in which the end portion was inserted.

This elastic projection enables an end portion of the structural object that is inserted into the fitting groove of the guiding support portion to be positioned along the insertion direction.

In the structural object supporting structure of the present invention, the fitting groove of the guiding support portion may be provided with a pressing portion that, when an end portion of the structural object is slid into the fitting groove to be abutted against the stopper, causes the end portion of the structural object to be sandwiched between the cross-piece and the pressing portion, and the pressing portion may be shaped such that the interval between the pressing portion and the cross-piece toward the stopper is smaller than the interval between the pressing portion and the cross-piece toward one open end portion of the fitting groove.

This pressing portion makes it possible to fix an end portion of the structural object in a reliable manner.

In the structural object supporting structure of the present invention, a pair of the fitting grooves extending parallel to each other may be provided on opposite sides of the guiding support portion, first adjacent ends of the fitting grooves may be respectively open, and second adjacent ends of the fitting grooves may be provided with respective stoppers.

In this case, the fitting portions of each of the structural objects can be fitted into the fitting grooves located on opposite sides of the guiding support portion, and the structural object can be supported on the opposite sides of the guiding support portion. Also, when the guiding support portion is reversed left to right, the positions of the stoppers are reversed. Accordingly, the stoppers of the guiding support portion that are reversed left to right can prevent the structural objects from sliding in the opposite direction.

In the structural object supporting structure of the present invention, the guiding support portion may be provided at a position on the center line of the cross-piece.

With this configuration, if a wind pressure is applied to the structural object, the wind pressure evenly acts on the center line of the cross-piece. This increases the load resistance of the cross-piece.

Even if a wind pressure acts on a location one-sided from the center line of the cross-piece, a twisting force acts on the cross-piece, and therefore the strength of the cross-piece is reduced.

Furthermore, in the structural object supporting structure of the present invention, two cross-pieces may be disposed parallel and at different heights, and respective guiding support portions may be disposed on the cross-pieces, and opposite ends of the structural object may be disposed on the cross-pieces in a bridging manner, one of the ends of the structural object may be abutted against the lower one of the cross-pieces so as to be slidable in the longitudinal direction of the cross-pieces, the opposite ends of the structural object may be slid on the cross-pieces, and the fitting portions provided on the opposite ends of the structural object may be inserted and fitted into the fitting grooves of the guiding support portions on the cross-pieces so as to be abutted against the stoppers.

When opposite ends of the structural object are disposed on the cross-pieces having different heights in a bridging manner in this way, the structural object is inclined and thus tends to slip off downward in the direction of inclination. However, one end of the structural object abuts the lower one of the cross-pieces, and therefore such slipping-off of the structural object can be prevented, and the operation safety can be ensured. Moreover, the abutment of one end of the structural object allows the fitting portion on opposite ends of the structural object to be positioned, and therefore the fitting portions on the opposite ends of the structural object can be easily fitted into the fitting grooves of the guiding support portion on each of the cross-pieces.

In the structural object supporting structure of the present invention, the guiding support portion may include a cover portion that covers at least half of the guiding support portion.

At least half of the guiding support portion can be concealed by this cover portion, and therefore the guiding support portion can be made inconspicuous.

In the structural object supporting structure of the present invention, the structural object may include a solar cell panel and a tension bar fixed to the underside of the solar cell panel, and the fitting portion may be provided at an end of the tension bar.

In this case, it is possible to easily mount the structural object (solar cell module) made up of the solar cell panel and the tension bar located on the underside thereof, and also ensure safety of the operation.

Furthermore, in the structural object supporting structure of the present invention, an end portion of the solar cell panel may overhang above the guiding support portion supporting the end of the tension bar, and cover the guiding support portion.

In this case, the guiding support portion is concealed by an end portion of the solar cell panel, and therefore the guiding support portion is not exposed or hardly exposed, making it possible to realize a desired appearance.

The structural object supporting structure of the present invention may include: a fastening member for removably fastening and fixing the guiding support portion onto the cross-piece, wherein the fastening member is provided so as to be removable below the cross-piece.

When the guiding support portion is concealed by an end portion of the solar cell panel, it is difficult to remove a fastening member, such as a bolt, used for fixing the guiding support portion onto the cross-piece. Therefore, the fastening member that can be removed below the cross-piece is provided.

Next, a structural object mount according to the present invention is a structural object mount that supports a structural object, including: a cross-piece on which an end of the structural object is placed; a guiding support portion disposed on the cross-piece; and a stopper provided on one end side of the guiding support portion, wherein the guiding support portion is provided with a fitting groove at least an end of which opposite to the stopper is open and that extends in the longitudinal direction of the cross-piece such that a part of the end of the structural object slidingly fits into the fitting groove in the longitudinal direction of the cross-piece to abut the stopper.

In the structural object mount of the present invention, an anti-sliding member may be provided that prevents the structural object from sliding in a direction opposite to the direction in which the structural object abuts the stopper of the guiding support portion.

In a state in which a plurality of structural objects are arranged side by side, the structural objects are prevented from sliding in the direction of descending order of their arrangement by the stopper of the guiding support portion. Further, when the last structural object is prevented from sliding by an anti-sliding member, any structural object other than the last structural object is prevented from sliding in the direction of ascending order of the arrangement by the immediately succeeding structural object. Thereby, all the structural objects arranged side by side are supported without sliding in either the direction of the descending order or the direction of the ascending order.

Furthermore, in the structural object mount of the present invention, the guiding support portion may be removably fixed onto the cross-piece.

In a state in which a plurality of structural objects are arranged side by side, when an attempt is made to remove any given structural object by removing the fitting portions of the given structural object into the fitting grooves of the guiding support portion by causing the given structural object to slide, the given structural object cannot be removed because the structural object is prevented from sliding by other adjacent structural objects. Therefore, the guiding support portion is made removable so as to allow removal of any given structural object.

The structural object mount of the present invention may include: a fastening member for removably fastening and fixing the guiding support portion onto the cross-piece, wherein the fastening member is provided so as to be removable below the cross-piece.

This makes it possible to remove the fastening member below the cross-piece to remove the guiding support portion, and also make it possible to remove the structural object.

In the structural object mount of the present invention, a plurality of the cross-pieces may be disposed parallel and at different heights, and respective guiding support portions may be disposed on the cross-pieces, and opposite ends of the structural object may be disposed on the cross-pieces in a bridging manner, one of the ends of the structural object may be abutted against the lower one of the cross-pieces so as to be slidable in the longitudinal direction of the cross-pieces, the opposite ends of the structural object may be slid on the cross-pieces, and the fitting portions provided on the opposite ends of the structural object may be inserted and fitted into the fitting grooves of the guiding support portions on the cross-pieces so as to be abutted against the stoppers.

In this case, the structural object are disposed on the cross-pieces having different heights in a bridging manner, and therefore each structural object is inclined and thus tends to slip off downward in the direction of inclination. However, one end of each structural object abuts the lower one of the cross-pieces, and therefore such slipping-off of the structural object can be prevented, and the operation safety can be ensured. Moreover, the abutment of one end of each structural object allows the fitting portion on opposite ends of the structural object to be positioned, and therefore the fitting portions on the opposite ends of the structural object can be easily fitted into the fitting grooves of the guiding support portion on each of the cross-pieces.

Furthermore, in the structural object mount of the present invention, the structural object may include a solar cell panel and a tension bar fixed to the underside of the solar cell panel, and the fitting portion and the abutting portion may be provided at opposite ends of the tension bar.

In this case, a plurality of structural objects (solar cell modules) each made up of a solar cell panel and a tension bar located on the underside can be arranged side by side and supported.

Next, another structural object mount according to the present invention is a structural object mount that supports a plurality of structural objects, including: a plurality of cross-pieces disposed parallel; a plurality of guiding support portions disposed on the cross-pieces with an interval; and, a stopper provided on one end side of each of the guiding support portions, wherein each of the guiding support portions is provided with a fitting groove at least an end of which opposite to the stopper is open and that extends in the longitudinal direction of the cross-piece such that the fitting portion provided at the end of each of the structural objects slidingly fits into the fitting groove in the longitudinal direction of the cross-piece to abut the stopper.

With this structural object mount, a plurality of structural objects can be arranged side by side and supported by repeating the operation of disposing the structural object, spanning between the cross-pieces, and inserting and fitting the fitting portions located at opposite ends of the structural object into the fitting grooves of the guiding support portions on the cross-pieces to be abutted against the stopper.

In the structural object mount having this configuration, an anti-sliding member may be provided that prevents the final structural object of the supported structural objects from sliding.

Next, a method for installing a structural object according to the present invention is a method for installing a structural object using the above-described structural object mount of the present invention, including: a sliding fitting step of disposing opposite ends of the structural object on the cross-pieces in a bridging manner, disposing the opposite ends of the structural object so as to be outside of the positions of the guiding support portions on respective cross-pieces, causing one of the ends of the structural object to be abutted against the lower one of the cross-pieces so as to be slidable in the longitudinal direction of the cross-pieces, causing the opposite ends of the structural object to slide on the cross-pieces, and inserting and fitting the fitting portions provided on the opposite ends of the structural object into the fitting grooves of the guiding support portions on the cross-pieces so as to be abutted against the stoppers, wherein a plurality of the structural objects are sequentially arranged and supported on the cross-pieces by successively repeating the sliding fitting step for the plurality of the structural objects.

According to this structural object installation method, opposite ends of the structural object are caused to slide on the respective corresponding cross-pieces after disposing the opposite ends of the structural object so as to be outside of the positions of the guiding support portions on the cross-pieces, and the fitting portions on the opposite ends of each of the structural objects are inserted and fitted into the fitting grooves of the guiding support portions on the cross-pieces so as to be abutted against the stoppers. By successively repeating this sliding fitting step, a plurality of structural objects can be sequentially arranged and supported on the cross-pieces.

Since the fitting portions on opposite ends of the structural object is positioned by the abutment of one end of the structural object, the fitting portions on the opposite ends of the structural object can be easily fitted into the fitting grooves of the guiding support portion on the cross-pieces. Accordingly, the movement of the structural object is restricted by the abutment of the abutting portion of the structural object, which increases the operation safety.

Next, a solar photovoltaic system according to the present invention is a solar photovoltaic system including a solar cell module, including: a plurality of cross-pieces disposed parallel, wherein the solar cell module includes a solar cell panel and a tension bar fixed parallel to one edge of the solar cell panel, and opposite ends of the tension bar are supported on the plurality of cross-pieces in a bridging manner.

Another solar photovoltaic system according to the present invention is a solar photovoltaic system including a solar cell module, including: a plurality of cross-pieces disposed parallel, wherein the solar cell module includes a solar cell panel and a tension bar that is fixed paralled to one edge of the solar cell panel and spaced away from the edge, and opposite ends of the tension bar are supported on the plurality of cross-pieces in a bridging manner.

Yet another solar photovoltaic system according to the present invention is a solar photovoltaic system including a solar cell module, including: a plurality of cross-pieces disposed parallel, wherein the solar cell module includes a solar cell panel and a tension bar fixed paralled to one edge of the solar cell panel, opposite ends of the tension bar are supported on the plurality of cross-pieces in a bridging manner, and at least one of the cross-pieces supports a plurality of solar cell modules on opposite sides of the direction in which the cross-piece extends.

A further solar photovoltaic system according to the present invention is a solar photovoltaic system including a solar cell module, including: a plurality of cross-pieces disposed parallel, wherein the solar cell module includes a solar cell panel and a tension bar fixed to the underside of the solar cell panel, and opposite ends of the tension bar are supported on the plurality of cross-pieces in a bridging manner.

This solar photovoltaic system has a structure in which opposite ends of the tension bar on the underside of the solar cell panel are supported on a plurality of cross-pieces in a bridging manner, and the tension bar serves the function of reinforcing the cross-pieces. In other words, the tension bar not only serves as a component of the solar cell module made up of the solar cell panel and the tension bar, but also serves the function of a component of a mount that supports the solar cell module. This can produce a significant reduction in the number of parts and the costs of the solar photovoltaic system.

The solar photovoltaic system of the present invention may include: a guiding support portion disposed on the cross-piece; and a stopper provided on one end side of the guiding support portion, wherein the guiding support portion includes a fitting groove extending parallel to the cross-piece, and the end of the tension bar is provided with a fitting portion that is inserted into the fitting groove of the guiding support portion from an open end of the fitting groove to abut the stopper on one end side of the fitting groove, and an abutting portion that abuts the cross-piece so as to position the fitting portion of the tension bar with respect to the fitting groove of the guiding support portion.

In this case, the fitting portion of the tension bar is positioned by the abutment of the abutting portion of the tension bar, and therefore the fitting portion of the tension bar can be easily fitted into the fitting grooves of the guiding support portion on each cross-piece. Further, the movement of the tension bar (solar cell module) is restricted by the abutment of the abutting portion of the tension bar, which increases the operation safety.

### Effects of the Invention

According to the present invention, when the abutting portion of the structural object is abutted against the cross-piece, the position of the fitting portion of the structural object with respect to the fitting grooves of the guiding support portion is set. In this state, when an end of the structural object is slid on the cross-piece, the fitting portion of the structural object is inserted and fitted into the fitting groove of the guiding support portion to abut the stopper. Accordingly, the fitting portion of the structural object can be easily fitted into the fitting grooves of the guiding support portion. Furthermore, the movement of the structural object is restricted in a state in which the abutting portion of the structural object abuts the cross-piece, which increases the operation safety.

Further, in a structure of the invention, opposite ends of the tension bar on the underside of the solar cell panel are supported on a plurality of cross-pieces in a bridging manner, and the tension bar serves the function of reinforcing the cross-pieces. In other words, the tension bar not only serves as a component of the solar cell module made up of the solar cell panel and the tension bar, but also serves the function of a component of a mount that supports the solar cell module. This can produce a significant reduction in the number of parts and the costs of the solar photovoltaic system.

### Brief Description of Drawings

[FIG. 1] FIG. 1 is a perspective view showing a solar photovoltaic system that supports a plurality of solar cell modules using one embodiment of a structural object mount of the present invention.
[FIG. 2] FIG. 2 is a perspective view showing a solar cell module.
[FIG. 3] FIG. 3 is an enlarged perspective view showing the vicinity of an end of a tension bar of the solar cell module.
[FIGS. 4] FIGS. 4(a) and 4(b) are respectively an enlarged front view and an enlarged side view showing the end of the tension bar.
[FIG. 5] FIG. 5 is a perspective view showing a base cross-piece of the structural object mount of FIG. 1.
[FIG. 6] FIG. 6 is a perspective view showing an arm of the structural object mount of FIG. 1.
[FIGS. 7] FIGS. 7(a) and 7(b) are respectively a perspective view and a plan view showing a vertical cross-piece of the structural object mount of FIG. 1.
[FIGS. 8] FIGS. 8(a) and 8(b) are respectively a perspective view and a plan view showing a cross-piece member constituting a component of a horizontal cross-piece of the structural object mount of FIG. 1.
[FIG. 9] FIG. 9 is a perspective view showing another cross-piece member constituting a component of a horizontal cross-piece of the structural object mount of FIG. 1.
[FIGS. 10] FIGS. 10(a) and 10(b) are respectively a perspective view and a front view showing a triangular structure made up of the base cross-piece, the arm, and the vertical cross-piece.
[FIG. 11] FIG. 11 is a cross-sectional view showing a connection structure between the arm and the base cross-piece.
[FIG. 12] FIG. 12 is a perspective view showing a mounting fitting used for connecting and fixing the horizontal cross-piece to the vertical cross-piece.
[FIG. 13] FIG. 13 is a perspective view showing a state in which the mounting fitting of FIG. 12 is mounted to the vertical cross-piece.
[FIG. 14] FIG. 14 is a cross-sectional view showing a state in which the horizontal cross-piece is connected to the vertical cross-piece.
[FIG. 15] FIG. 15 is a perspective view showing a connection structure between the cross-piece members.
[FIG. 16] FIG. 16 is a perspective view showing a guiding support member of the structural object mount of FIG. 1.
[FIGS. 17] FIGS. 17(a), 17(b), and 17(c) are respectively a front view, a plan view, and a side view showing the guiding support member.
[FIG. 18] FIG. 18 is a perspective view showing a mounting fitting used for fixing the guiding support member to the horizontal cross-piece.
[FIG. 19] FIG. 19 is a perspective view showing a state in which the mounting fitting of FIG. 18 is mounted to the horizontal cross-piece.
[FIG. 20] FIG. 20 is a perspective view showing a fixing structure for the guiding support member using the mounting fitting.
[FIG. 21] FIG. 21 is a cross-sectional view showing the fixing structure of FIG. 20.
[FIG. 22] FIG. 22 is an exploded perspective view showing a fixing structure for the guiding support member using the mounting fitting.
[FIG. 23] FIG. 23 is a perspective view showing a main structure of the structural object mount according to the present embodiment.
[FIG. 24] FIG. 24 is a perspective view showing an operation procedure for mounting solar cell modules to the structural object mount of FIG. 23.
[FIG. 25] FIG. 25 is a partial enlarged view of FIG. 24.
[FIG. 26] FIG. 26 is a perspective view showing the periphery of the guiding support member that supports the last solar cell module of the structural object mount of FIG. 23.
[FIG. 27] FIG. 27 is a cross-sectional view showing a fixing structure for a solar cell module using a modification of the end portion of the tension bar.
[FIG. 28] FIG. 28 is a cross-sectional view showing a fixing structure for a solar cell module using modifications of the guiding support member and the mounting fitting of the structural object mount.
[FIG. 29] FIG. 29 is a perspective view showing the guiding support member of FIG. 28.
[FIG. 30] FIG. 30 is a perspective view showing the mounting fitting of FIG. 28.
[FIG. 31] FIG. 31 is a cross-sectional view showing a fixing structure for a solar cell module using another modification of the guiding support member of the structural object mount.
[FIG. 32] FIG. 32 is a perspective view showing the guiding support member of FIG. 31.
[FIG. 33] FIG. 33 is a perspective view showing another modification of the guiding support member of the structural object mount.
[FIG. 34] FIG. 34 is a perspective view showing a fixing structure for a solar cell module using the guiding support member of FIG. 33.
[FIG. 35] FIG. 35 is a cross-sectional view showing a fixing structure for a solar cell module using the guiding support member of FIG. 33.
[FIG. 36] FIG. 36 is a perspective view showing a modification of the solar photovoltaic system.

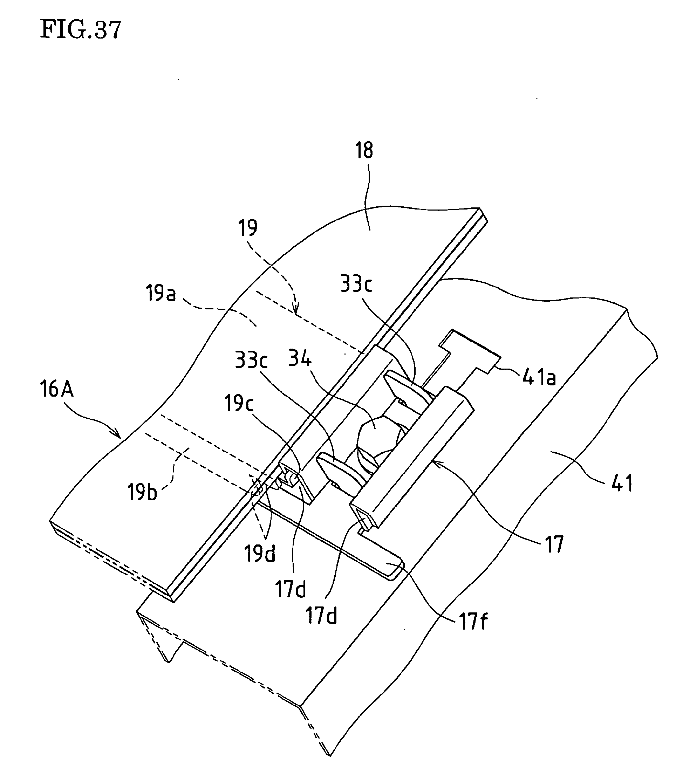

[FIG. 37] FIG. 37 is a partial enlarged perspective view showing the solar photovoltaic system of FIG. 36.
[FIG. 38] FIG. 38 is a perspective view showing yet another modification of the guiding support member of the structural object mount.
[FIGS. 39] FIGS. 39(a), 39(b), and 39(c) are respectively a plan view, a side view, and a front view showing the guiding support member of FIG. 38.
[FIGS. 40] FIGS. 40(a) and 40(b) are respectively a perspective view showing a fixing structure for the guiding support member of FIG. 38 as viewed from above, and an exploded perspective view thereof as viewed from below.
[FIG. 41] FIG. 41 is a cross-sectional view showing a fixing structure for the guiding support member of FIG. 38.
[FIG. 42] FIG. 42 is a perspective view showing another modification of the end portion of the tension bar of the solar cell module.
[FIG. 43] FIG. 43 is a perspective view showing an operation for mounting the tension bar of the solar cell module to the guiding support member of FIG. 38.
[FIG. 44] FIG. 44 is a plan view showing a fixing structure for the solar cell module using the guiding support member of FIG. 38.
[FIG. 45] FIG. 45 is a side view showing a fixing structure for the solar cell module using the guiding support member of FIG. 38.

### Modes for Carrying out the Invention

Hereinafter, an embodiment of the present invention will be described in detail with reference to the accompanying drawings.

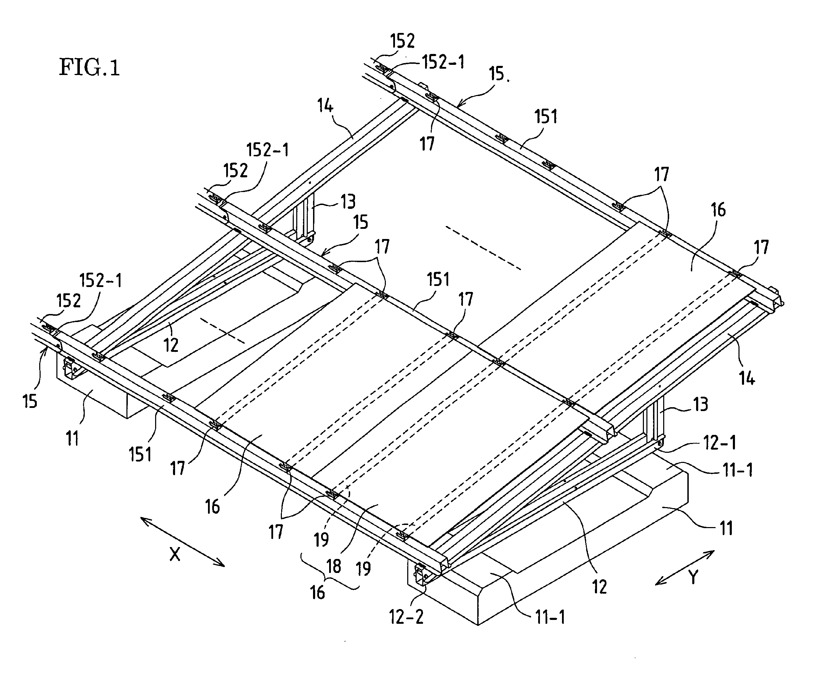

FIG. 1 is a perspective view showing a solar photovoltaic system that supports a plurality of solar cell modules using one embodiment of a structural object mount of the present invention.

This solar photovoltaic system is intended for use as a power plant, and includes many solar cell modules.

As shown in FIG. 1, the solar photovoltaic system includes a plurality of concrete foundations 11 that are laid on the ground at equal intervals. Base cross-pieces 12 are fixed to upper faces 11-1 of the respective corresponding concrete foundations 11, and are arranged side by side at equal intervals. Arms 13 are connected in an upright position to rear end portions 12-1 of the respective corresponding base cross-pieces 12. Vertical cross-pieces 14 are fixed to front end portions 12-2 of the respective corresponding base cross-pieces 12 and upper end portions of the arms 13, spanning obliquely therebetween. Three horizontal cross-pieces 15 are disposed orthogonal to the vertical cross-pieces 14. The horizontal cross-pieces 15 are arranged side by side and at different heights on the vertical cross-pieces 14, and a plurality of solar cell modules 16 are inclined, spanning between the horizontal cross-pieces 15. Opposite ends of the solar cell modules 16 are fixed and supported with a plurality of guiding support members 17 fixed onto the horizontal cross-pieces 15 with an interval.

In a solar photovoltaic system having this configuration, a plurality of solar cell modules 16 are mounted in a row sideways between the lower horizontal cross-piece 15 and the middle horizontal cross-piece 15. Likewise, a plurality of solar cell modules 16 are mounted in a row sideways between the middle horizontal cross-piece 15 and the upper horizontal cross-piece 15. Therefore, two rows of the plurality of solar cell modules 16 are arranged on the three horizontal cross-pieces 15. Also, six solar cell modules 16 are provided between any two vertical cross-pieces 14 that are adjacent to each other in the left-right direction.

Note that, in FIG. 1, a direction in which the concrete foundations 11 are arranged is referred to as an X direction (a left-right direction), and a direction orthogonal to the X direction is referred to as a Y direction (a front-back direction).

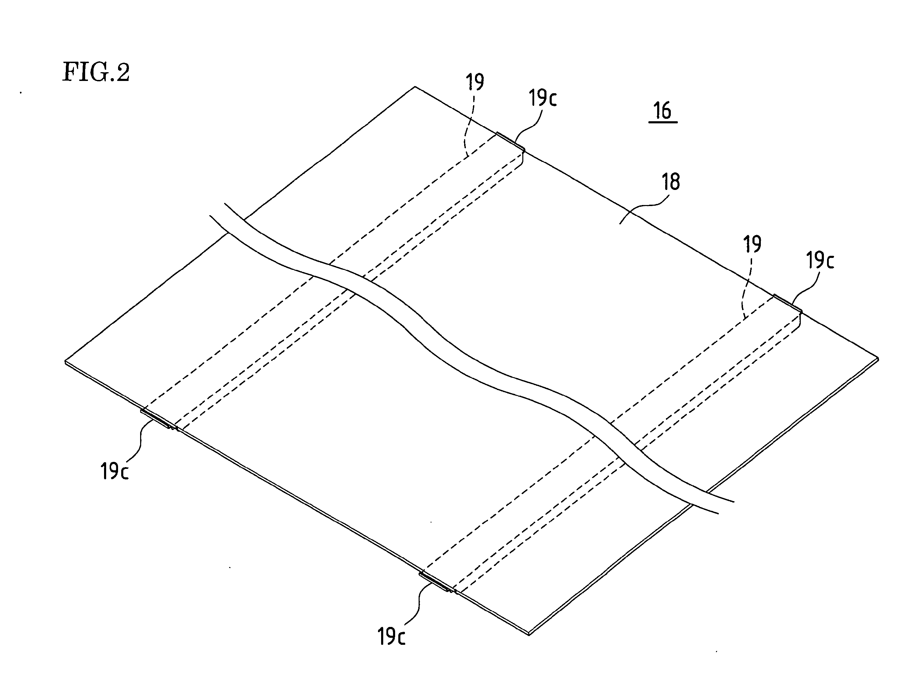

FIG. 2 is a perspective view showing the solar cell module 16. As shown in FIG. 2, the solar cell module 16 includes a solar cell panel 18 and two tension bars 19 that are disposed parallel to each other and fixed to the underside of the solar cell panel 18. The solar cell panel 18 is formed, for example, by interposing a semiconductor layer that photoelectrically converts sunlight between two glass plates. Alternatively, it may be formed by interposing the semiconductor layer between a single glass plate and a protective layer. The tension bars 19 are attached and fixed to the underside of the solar cell panel 18 with an adhesive or the like. Each tension bar 19 is provided parallel to one edge of the solar cell panel 18 and spaced apart from that edge. In addition, the tension bars 19 are formed by cutting and folding a steel plate. Alternatively, the tension bars 19 may be formed by extruding an aluminum material.

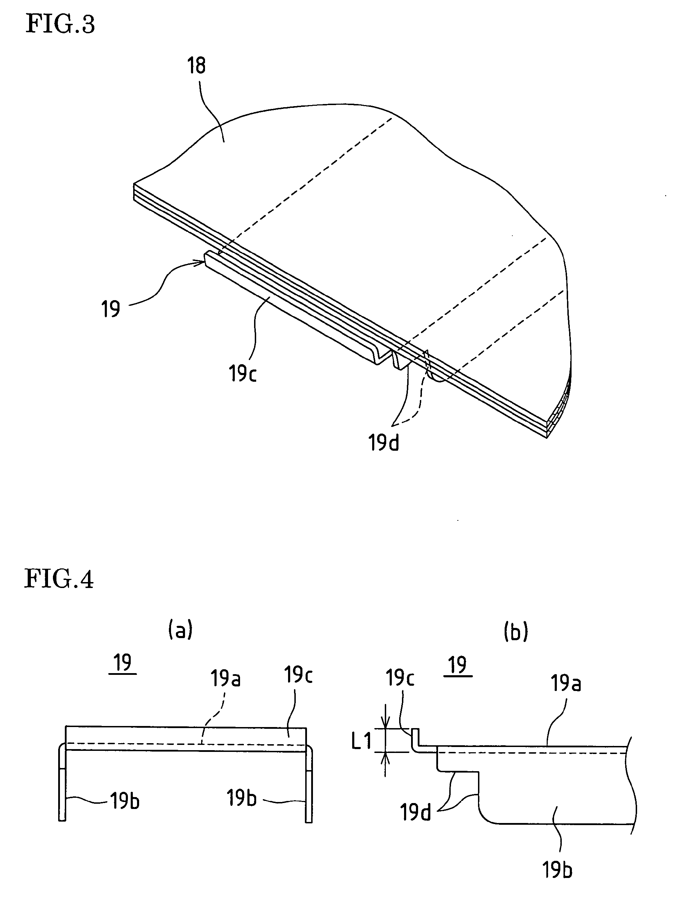

FIG. 3 is an enlarged perspective view showing the vicinity of an end of the tension bar 19 of the solar cell module 16. FIGS. 4(a) and 4(b) are respectively an enlarged front view and an enlarged side view showing the end of the tension bar 19.

As shown in FIGS. 3, 4(a), and 4(b), the tension bar 19 includes a elongated main plate 19a, side plates 19b bent downward on opposite sides of the main plate 19a, and fitting portions 19c bent upward at opposite ends of the main plate 19a. Also, the opposite ends of each of the side plates 19b are partly cut into a rectangular shape, thus forming abutting portions 19d. Furthermore, the fitting portions 19c at the opposite ends of each tension bar 19 protrude beyond the corresponding end portions of the solar cell panel 18.

The structural object mount according to the present embodiment includes the concrete foundation 11, the base cross-piece 12, the arm 13, the vertical cross-piece 14, the horizontal cross-piece 15, and the guiding support member 17 shown in FIG. 1, and also uses the tension bar 19 shown in FIGS. 3 and 4 as a component of the mount.

Next, a description will be given of the concrete foundation 11, the base cross-piece 12, the arm 13, the vertical cross-piece 14, the horizontal cross-piece 15, and so forth that constitute the structural object mount.

The concrete foundations 11 are each produced by forming a formwork on the ground and pouring concrete into the formwork. The concrete foundations 11 are arranged at equal intervals, and the top faces 11-1 of the concrete foundations 11 are parallel and flush at the same height.

The top faces 11-1 of the concrete foundations 11 are used as horizontal underlying surfaces, onto which the base cross-pieces 12 are fixed at equal intervals and parallel. Furthermore, the base cross-pieces 12, the arms 13, the vertical cross-pieces 14, the horizontal cross-pieces 15, and so forth are connected and assembled together. It is, of course, possible to use foundations having other structures, such as a mat foundation that is produced by uniformly pouring concrete over the entire mount installation region, in place of the plurality of concrete foundations 11.

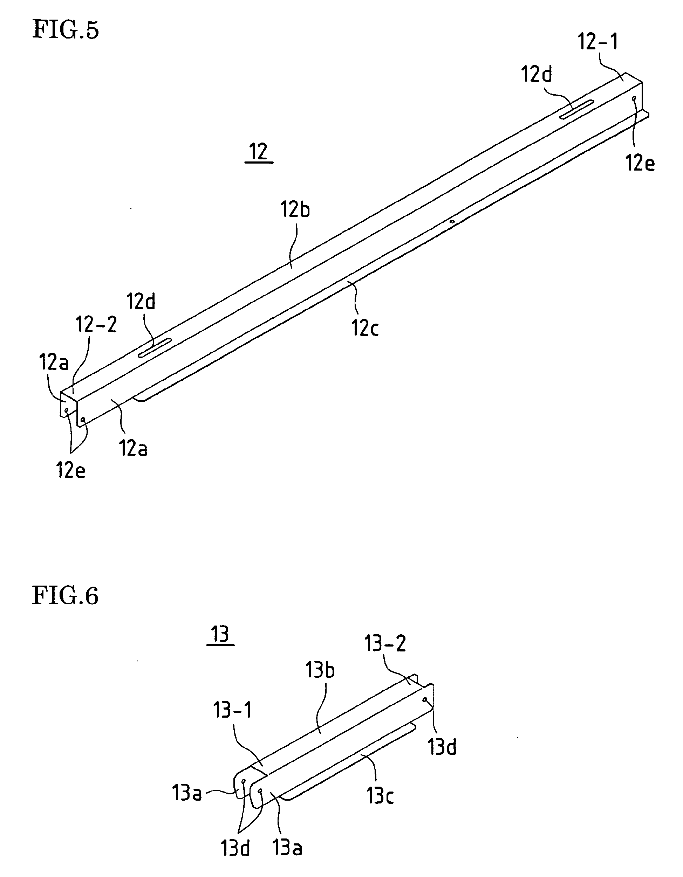

FIG. 5 is a perspective view showing the base cross-piece 12. As shown in FIG. 5, the base cross-piece 12 includes a main plate 12b, a pair of side plates 12a bent on opposite sides of the main plate 12b, and brims 12c bent outward at one edge of the respective corresponding side plates 12a, and thus, has a generally hat-shaped cross-section. Elongated holes 12d are formed in the vicinity of the respective corresponding opposite ends of the main plate 12b of the base cross-piece 12, and perforated holes 12e are formed in opposite end portions of the respective corresponding side plates 12a.

FIG. 6 is a perspective view showing the arm 13. As shown in FIG. 6 the arm 13 includes a main plate 13b, a pair of side plates 13a bent on opposite sides of the main plate 13b, and brims 13c bent outward at one edge of the respective corresponding side plates 13a, and, thus, has a generally hat-shaped cross-section. Perforated holes 13d are formed in opposite end portions of the respective corresponding side plates 13a of the arm 13.

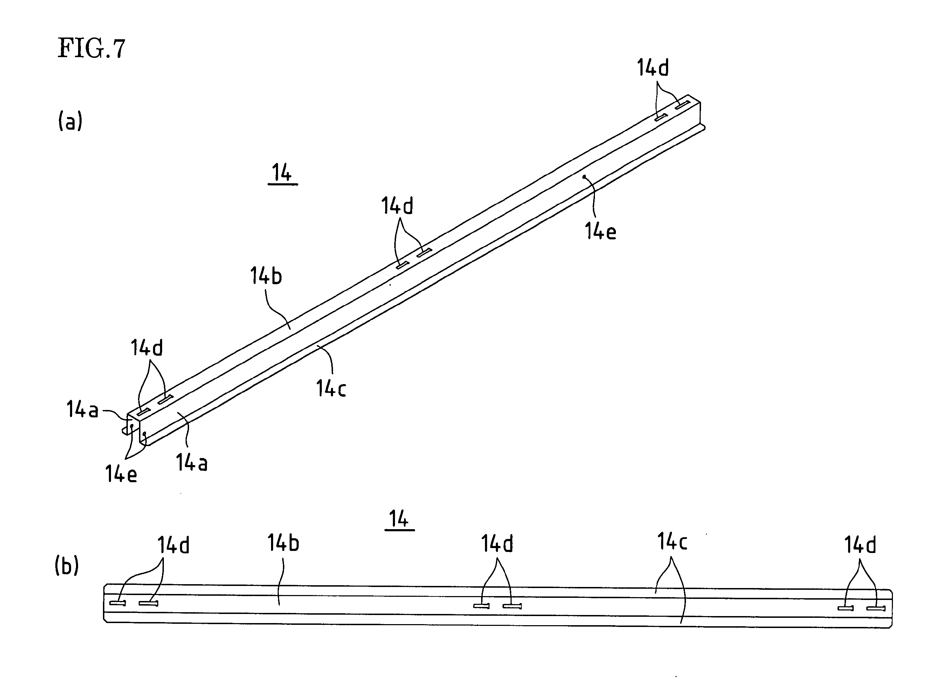

FIGS. 7(a) and 7(b) are respectively a perspective view and a plan view showing the vertical cross-piece 14. As shown in FIGS. 7(a) and 7(b) the vertical cross-piece 14 includes a main plate 14b, a pair of side plates 14a bent on opposite sides of the main plate 14b and brims 14c bent outward at one edge of the respective corresponding side plates 14a, and, thus, has a generally hat-shaped cross-section. A pair of T-shaped holes 14d are formed in the vicinity of opposite ends and at the center of the main plate 14b of the vertical cross-piece 14. In addition, perforated holes 14e are formed at front end portions of the respective corresponding side plates 14a, and perforated holes 14e are also formed in the respective corresponding side plates 14a in an area extending from the central portion toward the rear end portion.

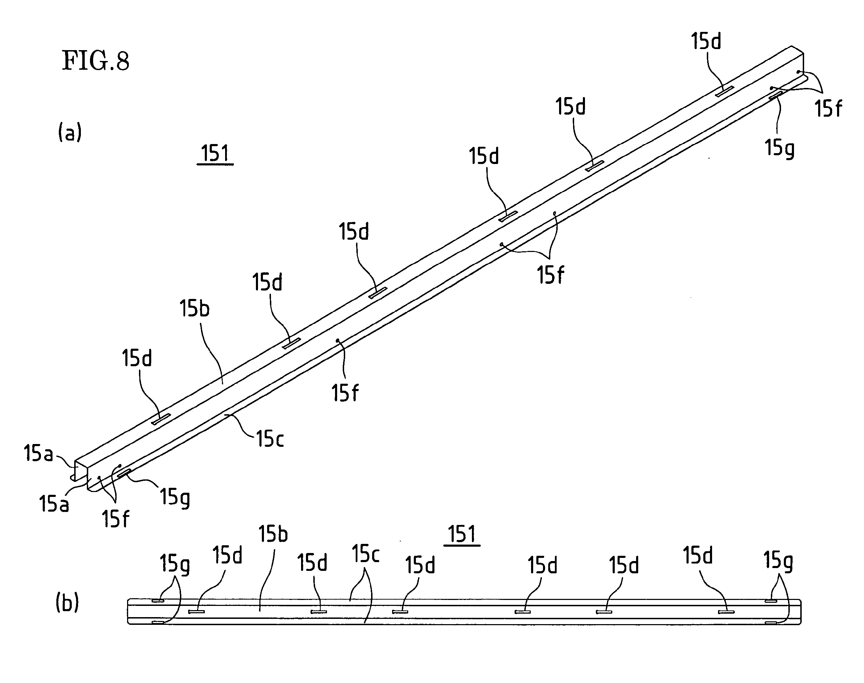

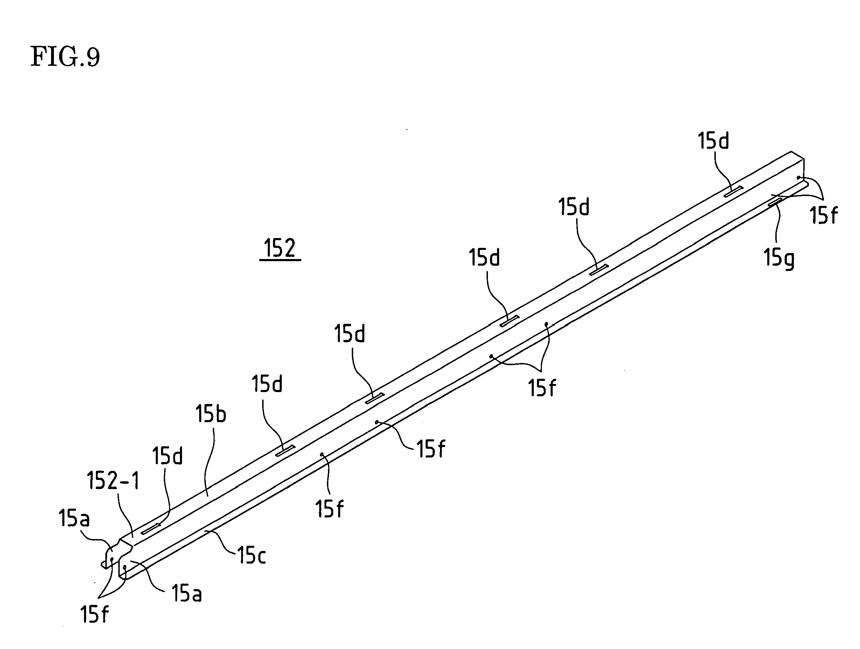

FIGS. 8(a), 8(b), and 9 show a cross-piece member constituting a component of the horizontal cross-piece 15. As shown in FIG. 1, the horizontal cross-piece 15 is very long in the X direction, and therefore, it is difficult to form the horizontal cross-piece 15 using a single member. Accordingly, the horizontal cross-piece 15 is formed by connecting a plurality of cross-piece members together.

FIGS. 8(a) and 8(b) are respectively a perspective view and a plan view showing the first cross-piece member 151, assuming that the rightmost cross-piece member 151 of the horizontal cross-piece 15 in FIG. 1 as the first cross-piece member. As shown in FIG. 8, the first cross-piece member 151 includes a main plate 15b, a pair of side plates 15a bent on opposite sides of the main plate 15b and brims 15c bent outward at one edge of the respective corresponding side plates 15a, and, thus, has a generally hat-shaped cross-section. T-shaped holes 15d are formed in six locations on the center line of the main plate 15b of the cross-piece member 151. In addition, perforated holes 15f are formed in a plurality of respective locations of the respective corresponding side plates 15a, and elongated holes 15g are formed in opposite end portions of the respective corresponding the brims 15c.

The cross-piece member 151 is slightly longer than the interval between vertical cross-pieces 14 of FIG. 1, which make is possible to span the cross-piece member 151 between the vertical cross-pieces 14.

FIG. 9 is a perspective view showing the second cross-piece member, or one of the subsequent cross-piece members 152 located on the left side of the first cross-piece member, assuming that the rightmost cross-piece member 151 in FIG. 1 as the first cross-piece member. As shown in FIG. 9, similar to the cross-piece member 151 of FIGS. 8, the second and subsequent cross-piece members 152 also each include a main plate 15b, a pair of side plates 15a, and brims 15c, and thus, has a hat-shaped cross-section. In addition, T-shaped holes 15d are formed in six locations on the center line of the main plate 15b. Perforated holes 15f are formed in a plurality of locations of the respective corresponding side plates 15a, and elongated holes 15g are formed in one end portion of the respective corresponding brims 15c.

The length of the cross-piece member 152 is substantially the same as the interval between vertical cross-pieces 14 of FIG. 1, and is slightly shorter than the cross-piece member 151.

Here, all the base cross-piece 12, the arm 13, the vertical cross-piece 14, and the horizontal cross-piece 15 include a main plate, a pair of side plates bent on opposite sides of the main plate, and brims bent outward at one edge of the respective corresponding side plates, and, thus, have a hat-shaped cross-section. Also, all the hat-shaped cross-sections have the same size. Furthermore, all of them are formed by cutting a plated steel plate having the same thickness, making holes through the plated steel plate, and bending the plated steel plate. Accordingly, the material and the processing apparatuses can be shared, thus achieving a significant cost reduction.

Next, a description will be given of a triangular structure that is assembled by putting together the base cross-piece 12, the arm 13, and the vertical cross-piece 14 on the concrete foundation 11.

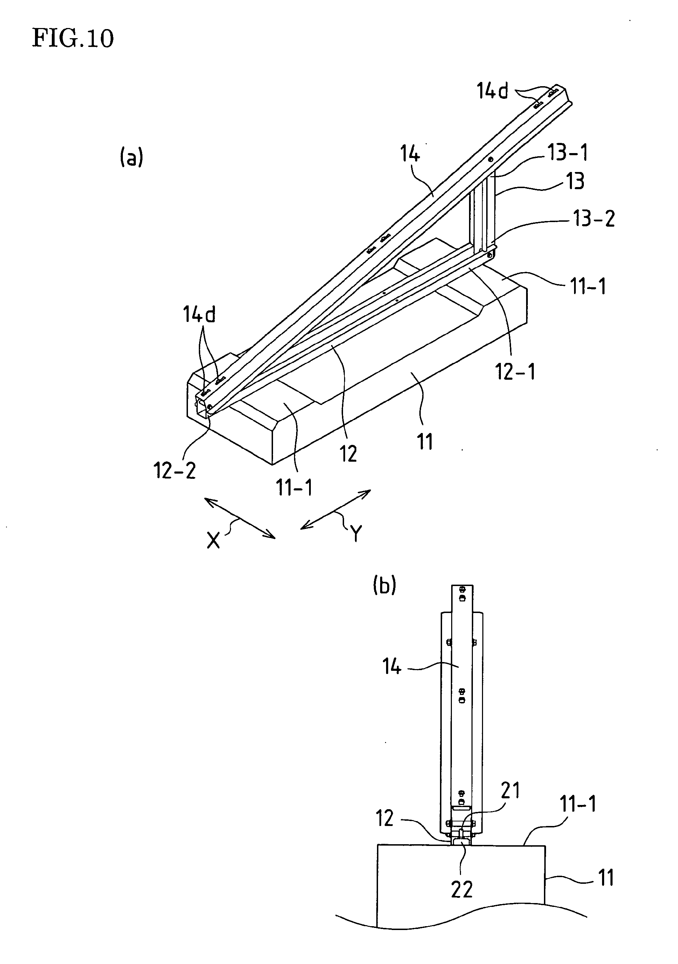

FIGS. 10(a) and 10(b) are respectively a perspective view and a front view showing a triangular structure made up of the base cross-piece 12, the arm 13, and the vertical cross-piece 14. As shown in FIGS. 10(a) and 10(b), the base cross-piece 12 is fixed to the top face 11-1 of the concrete foundation 11, and the arm 13 is connected in an upright position to the rear end portion 12-1 of the base cross-piece 12. The vertical cross-piece 14 is fixed to the front end portion 12-2 of the base cross-piece 12 and an upper end portion 13-1 of the arm 13, spanning obliquely therebetween. Thereby, a triangular structure made up of the base cross-piece 12, the arm 13, and the vertical cross-piece 14 is constructed.

Two bolts 21 are previously provided, protruding from the upper face 11-1 of the concrete foundation 11. The bolts 21 are inserted into the respective corresponding elongated holes 12d of the main plate 12b of the base cross-piece 12 such that the base cross-piece 12 is placed on the concrete foundation 11 with the main plate 12b of the base cross-piece 12 put on the upper surface 11-1 of the concrete foundation 11. In this case, the base cross-piece 12 can be moved along the elongated holes 12d (the Y direction of FIG. 1), and therefore, the position in the Y direction of the base cross-piece 12 is adjusted by moving the base cross-piece 12 in the Y direction.

After the base cross-piece 12 is placed on the top face 11-1 of the concrete foundation 11, the bolts 21 are inserted through the holes of the respective corresponding two reinforcement fitting 22 such that the reinforcement fittings 22 are disposed inside the base cross-piece 12. Then, nuts are screwed and fastened into the respective corresponding bolts 21, and, thereby, the base cross-piece 12 is fixed to the top face 11-1 of the concrete foundation 11.

Thereafter, the arm 13 is connected in an upright position to the rear end portion 12-1 of the base cross-piece 12. At this time, while the lower end portions of the side plates 13a are elastically deformed so as to approach each other, the lower end portions of the side plates 13a are inserted inside and thus interposed between the rear end portions of the side plates 12a of the base cross-piece 12, thereby making the arm 13 self-supporting.

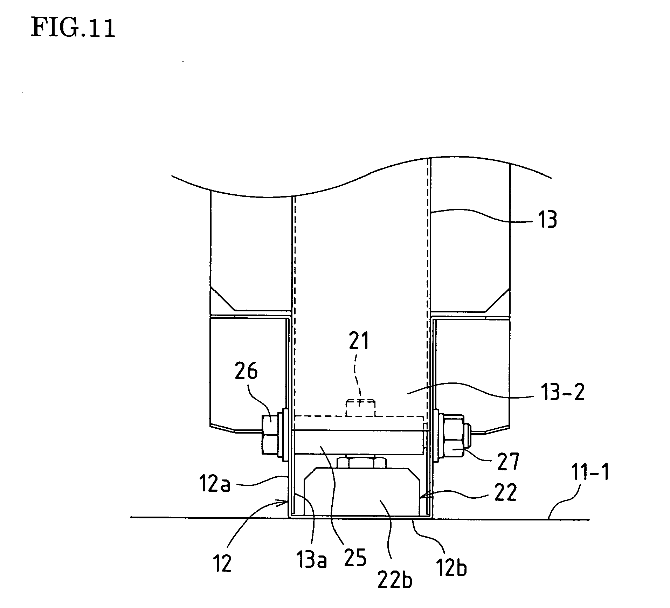

In a state in which the arm 13 is self supporting, a pipe 25 is inserted across between the side plates 13a of the arm 13 as shown in FIG. 11. The pipe 25, the perforated holes 13d of the side plates 13a of the arm 13, and the perforated holes 12e of the side plates 12a of the base cross-piece 12 are positioned. A bolt 26 is inserted through the pipe 25, the perforated holes 13d of the side plates 13a of the arm 13, the perforated holes 12e of the side plates 12a of the base cross-piece 12, and a washer. A nut 27 is screwed and fastened to an end of the bolt 26, and, thereby, the lower end portions of the side plates 13a of the arm 13 are connected to the side plates 12a of the base cross-piece 12.

Next, the vertical cross-piece 14 is fixed to the front end portion 12-2 of the base cross-piece 12 and the upper end portion 13-1 of the arm 13, spanning obliquely therebetween. At this time, the front end portions of the side plates 12a of the base cross-piece 12 are elastically deformed so as to approach each other, and are inserted inside the front end portions of the side plates 14a of the vertical cross-piece 14.

In this state, the front end portions of the side plates 14a of the vertical cross-piece 14 are connected to the front end portions of the side plates 12a of the base cross-piece 12 using a pipe, a bolt, a washer, and a nut in the same manner as that described with reference to FIG. 11.

Similarly, the upper end portions 13-1 of the side plates 13a of the arm 13 are elastically deformed so as to approach each other, and inserted inside the side plates 14a of the vertical cross-piece 14. Then, the upper end portions 13-1 of the arm 13 are connected to the side plates 14a of the vertical cross-piece 14 using a pipe, a bolt, a washer, and a nut in the same manner as that described with reference to FIG. 11.

Thus, a triangular structure made up of the base cross-piece 12, the arm 13, and the vertical cross-piece 14 is constructed. The triangular structure can sufficiently withstand forces in vertical and horizontal directions without significantly increasing the number of parts.

Next, a description will be given of a structure for connecting and fixing the cross-piece member 151, 152 constituting a component of the horizontal cross-piece 15 to the vertical cross-piece 14.

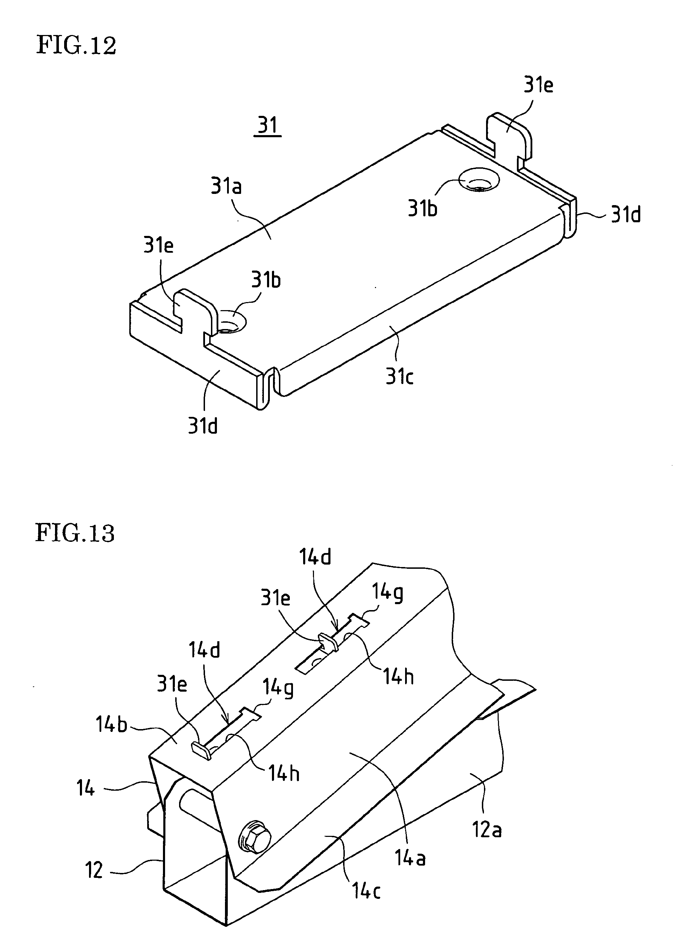

FIG. 12 is a perspective view showing a mounting fitting 31 used for connecting and fixing the cross-piece member 151, 152 of the horizontal cross-piece 15 to the vertical cross-piece 14. As shown in FIG. 12, the mounting fitting 31 includes a main plate 31a, side plates 31c bent on opposite sides of the main plate 31a, side plates 31d folded back twice at the front and back ends of the main plate 31a, and T-shaped supporting strips 31e protruding from the center of the respective corresponding side plates 31d. Two screw holes 31b are formed in the main plate 31a.

As shown in FIGS. 7 and 10, a pair of T-shaped holes 14d are formed in the vicinity of opposite ends and at the center of the main plate 14b of the vertical cross-piece 14. At each pair of T-shaped holes 14d, the mounting fitting 31 is mounted to the main plate 14b of the vertical cross-piece 14. The mounting fittings 31 are provided at three locations, i.e., at the center and in the vicinity of the opposite ends of the main plate 14b of the vertical cross-piece 14.

As shown in FIG. 13, a head portion of each supporting strip 31e of the mounting fitting 31 is inserted into a slit 14g of the corresponding T-shaped hole 14d, and the supporting strip 31e is moved to an engaging hole 14h of the T-shaped hole 14d, and the head portion of the supporting strip 31e is hooked to the engaging hole 14h of the T-shaped hole 14d. Thereby, the mounting fitting 31 is mounted to the main plate 14b of the vertical cross-piece 14.

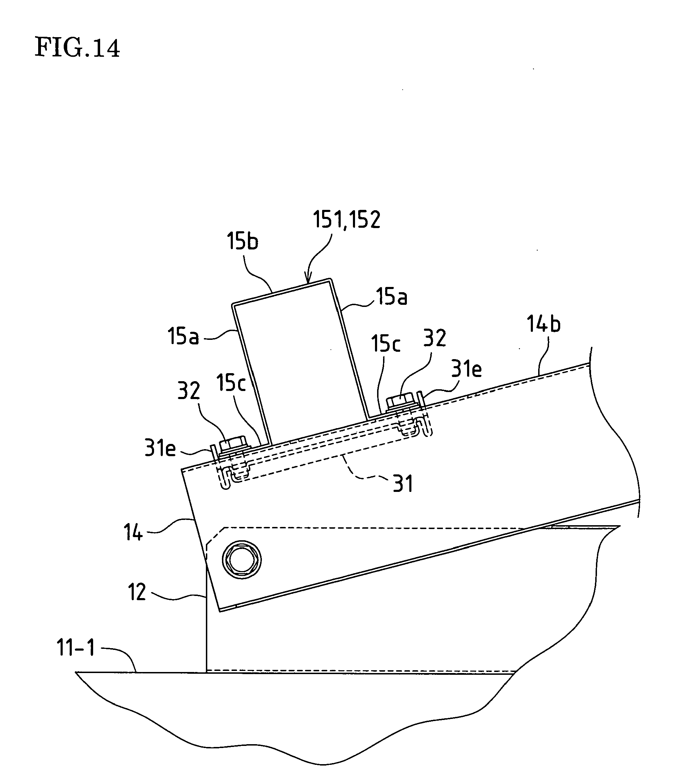

As shown in FIGS. 1 and 14, the cross-piece member 151, 152 is placed on the main plate 14b of the vertical cross-piece 14 so as to be orthogonal to the vertical cross-piece 14, and the brims 15c of the cross-piece member 151, 152 are arranged between the head portions of the supporting strips 31e of the mounting fitting 31. Then, the elongated holes 15g of the brims 15c of the cross-piece member 151, 152 are overlapped with the respective corresponding screw holes 31b of the mounting fitting 31 with the respective corresponding T-shaped holes 14d of the main plate 14b of the vertical cross-piece 14 interposed therebetween. Bolts 32 are screwed and temporarily fastened to the respective corresponding screw holes 31b of the mounting fitting 31 through the respective corresponding elongated holes 15g of the brims 15c of the cross-piece member 151, 152 and the respective corresponding T-shaped holes 14d of the main plate 14b of the vertical cross-piece 14.

In the temporarily fastened state, the bolts 32 can be moved along the respective corresponding elongated holes 15g of the brims 15c of the cross-piece member 151, 152. Therefore, the cross-piece member 151, 152 is moved along the elongated holes 15g (in the X direction of FIG. 1) such that the position in the X direction of the cross-piece member 151, 152 is adjusted.

The mounting fitting 31 can also be moved along the T-shaped holes 14d of the main plate 14b of the vertical cross-piece 14 (in the longitudinal direction of the vertical cross-piece 14), and the cross-piece member 151, 152 can also be moved along with the mounting fitting 31. By the movement of the cross-piece member 151, 152 in the longitudinal direction of the vertical cross-piece 14, the intervals between the three horizontal cross-pieces 15 disposed on the vertical cross-piece 14 are adjusted.

After the positions in the X direction of the three horizontal cross-pieces 15 are adjusted and the intervals between the horizontal cross-pieces 15 are adjusted, the bolts 32 of the mounting fittings 31 are fastened to fix the horizontal cross-pieces 15 to the vertical cross-pieces 14.

Next, a description will be given of a connection structure of a plurality of the cross-piece members 151, 152 constituting the horizontal cross-piece 15.

The cross-piece member 151 shown in FIGS. 8 is the rightmost (first) cross-piece member of the horizontal cross-piece 15 of FIG. 1, and is disposed, spanning between the vertical cross-pieces 14 provided on the first and second concrete foundations 11 of FIG. 1. The cross-piece member 151 is fixed to the vertical cross-pieces 14 using the mounting fittings 31.

The cross-piece member 152 shown in FIG. 9 is the second cross-piece member, or one of the subsequent cross-piece members 152, of the horizontal cross-piece 15 of FIG. 1, and is disposed, spanning between the left end portion of the immediately preceding cross-piece member and the succeeding vertical cross-piece 14. For example, the second cross-piece member 152 is disposed, spanning between the left end portion of the first cross-piece member 151 and the third vertical cross-piece 14. The third cross-piece member 152 is disposed, spanning between the left end portion of the second cross-piece member 152 and the fourth vertical cross-piece 14. The n-th cross-piece member 152 is disposed, spanning between the left end portion of the (n-1)th cross-piece member 152 and the (n+1)th vertical cross-piece 14. The second and subsequent cross-piece members 152 are also fixed to the respective corresponding vertical cross-pieces 14 using the mounting fittings 31.

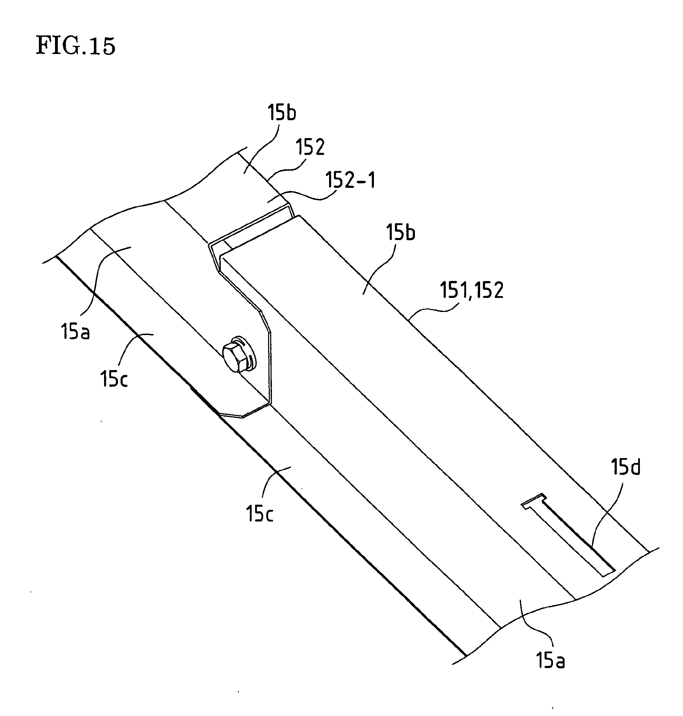

Then, as shown in FIG. 15, the left end portions of the side plates 15a of the first cross-piece member 151 are inserted inside and sandwiched between the one-end portions 152-1 of the side plates 15a of the second cross-piece member 152. The side plates 15a of the second cross-piece member 152 are connected to the side plates 15a of the first cross-piece member 151 using pipes, bolts, washers, and nuts in the same manner as that described with reference to FIG. 11.

Similarly, the left end portions of the side plates 15a of the (n-1)th cross-piece member 152 are inserted inside and sandwiched between the one-end portions of the side plates 15a of the nth cross-piece member 152. The n-th side plates 15a are connected to the (n-1)th side plates 15a using pipes, bolts, washers, and nuts in the same manner as that described with reference to FIG. 11.

Thus, the single long horizontal cross-piece 15 is formed by connecting the plurality of cross-piece members 151 and 152.

Next, a description will be given of a guiding support member 17 for connecting and fixing an end of the solar cell module 16 to the horizontal cross-piece 15.

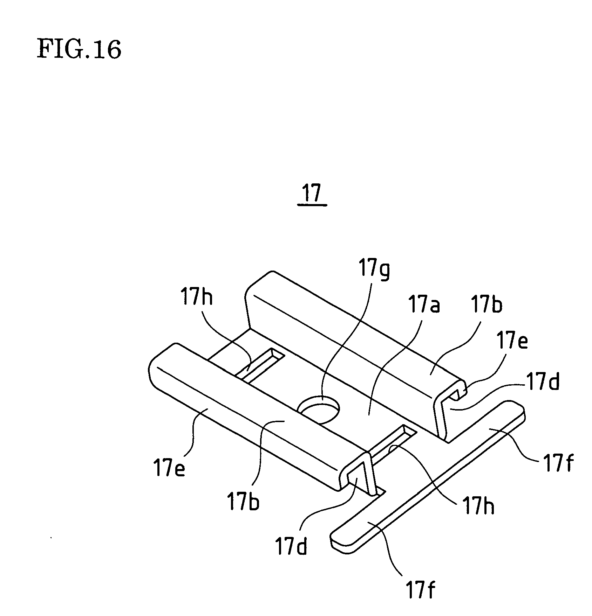

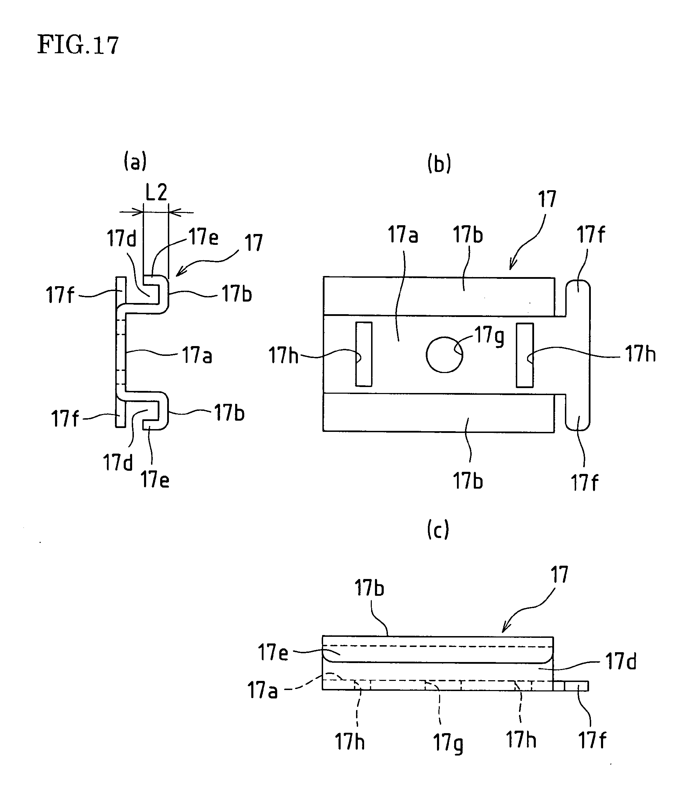

FIG. 16 is a perspective view showing the guiding support member 17. FIGS. 17(a), 17(b), and 17(c) are respectively a front view, a plan view, and a side view showing the guiding support member 17. As shown in FIGS. 16, 17(a), 17(b), and 17(c), the guiding support member 17 includes a main plate 17a, lateral portions 17b formed by bending three times (formed by bending upward, outward, and downward in order) opposite side portions of the main plate 17a. The inner sides of the lateral portions 17b serve as the fitting grooves 17d, and hooking portions 17e are provided on the upper side of the fitting grooves 17d. In addition, first adjacent ends of the fitting grooves 17d are open, and stoppers 17f are provided at second adjacent ends of the fitting grooves 17d. The stoppers 17f are formed by extending one end portion of the main plate 17a in a direction orthogonal to the respective fitting grooves 17d. Furthermore, a perforated hole 17g is formed at the center of the main plate 17a, and slits 17h are formed on the respective corresponding opposite sides of the perforated hole 17g.

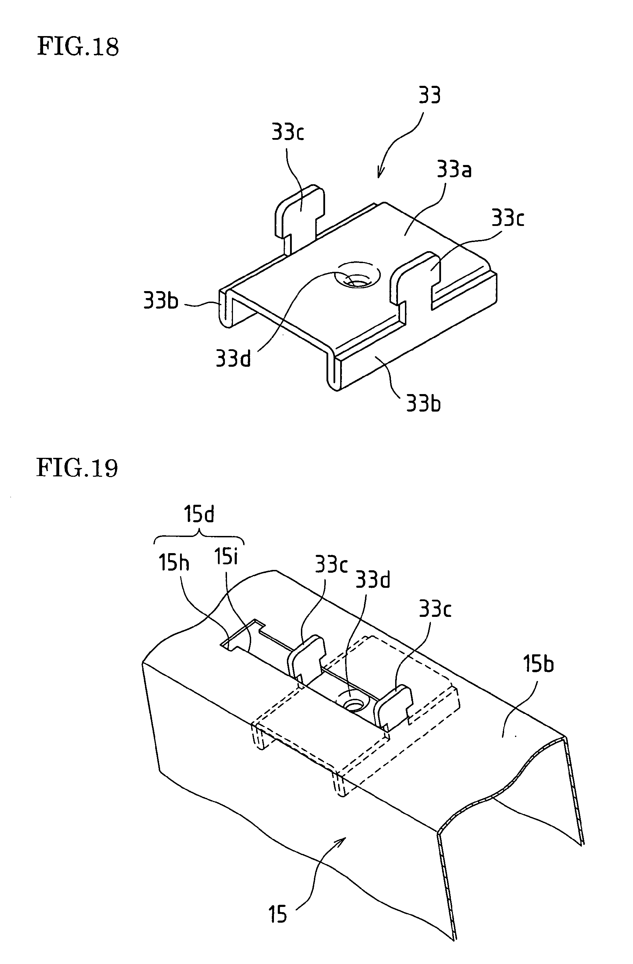

FIG. 18 is a perspective view showing a mounting fitting 33 used for fixing the guiding support member 17 to the horizontal cross-piece 15. As shown in FIG. 18, the mounting fitting 33 includes a main plate 33a, side plates 33b folded back twice on opposite sides of the main plate 33a, and T-shaped supporting strips 33c protruding from the center of the respective side plates 33b. A screw hole 33d is formed at substantially the center of the main plate 33a.

As shown in FIGS. 8(a), 8(b), and 9, the T-shaped holes 15d are formed at six locations of the main plate 15b of the cross-piece members 151, 152 used to form the horizontal cross-piece 15. For each of the T-shaped holes 15d, the mounting fitting 33 is mounted to the main plate 15b of the horizontal cross-piece 15.

As shown in FIG. 19, while head portions of the supporting strips 33c of the mounting fittings 33 are successively inserted into slits 15h of the respective corresponding T-shaped holes 15d of the main plate 15b of the horizontal cross-piece 15, the supporting strips 33c are moved to engaging holes 15i of the T-shaped holes 15d, and the head portions of the supporting strips 33c are hooked to the engaging holes 15i of the T-shaped holes 15d. Thereby, the mounting fittings 33 are mounted to the main plate 15b of the horizontal cross-piece 15.

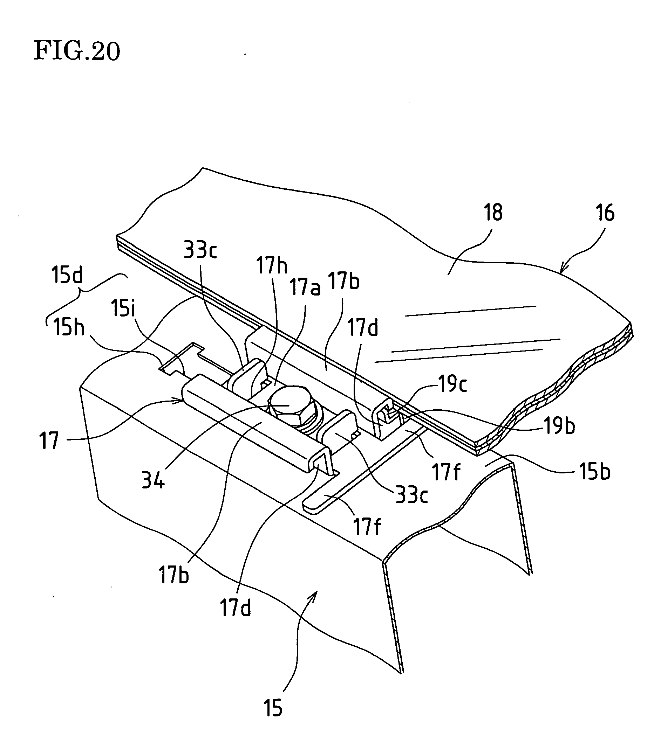

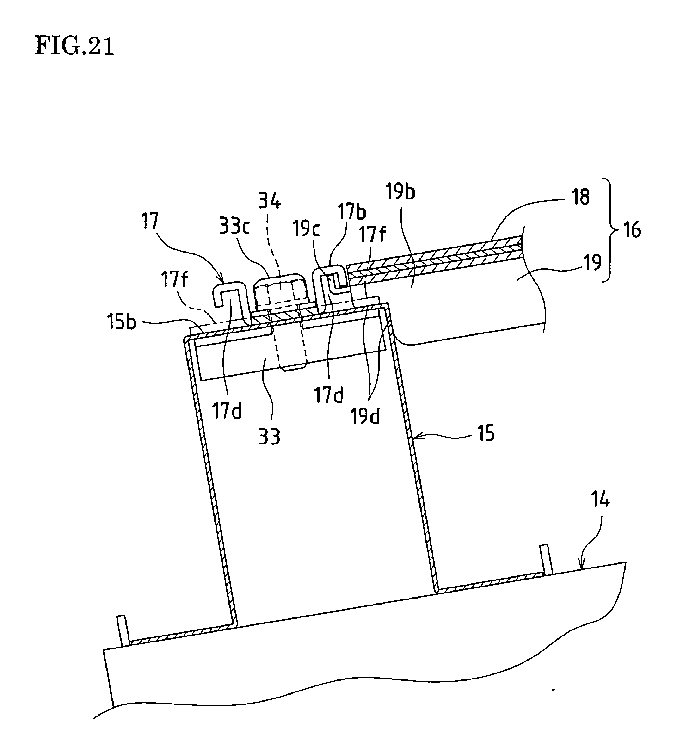

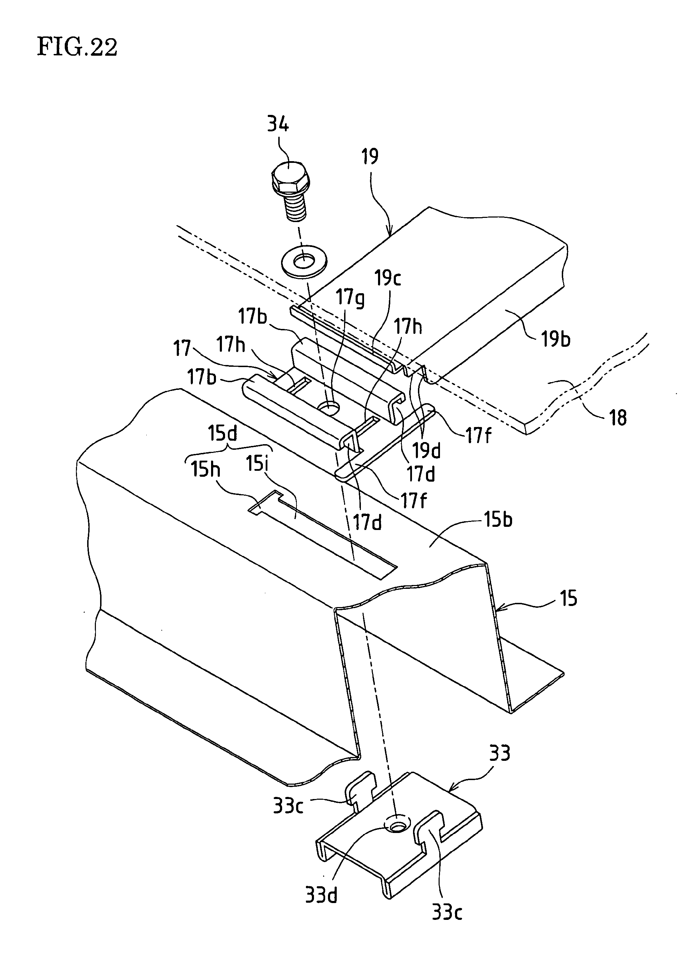

FIGS. 20 and 21 are respectively a perspective view and a cross-sectional view showing a fixing structure for the guiding support member 17 using the mounting fitting 33. FIG. 22 is an exploded perspective view showing a fixing structure for the guiding support member 17 using the mounting fitting 33.

As shown in FIGS. 20, 21, and 22, the head portions of the supporting strips 33c of the mounting fitting 33 are hooked to the T-shaped hole 15d of the main plate 15b of the horizontal cross-piece 15 such that the head portions of the supporting strips 33c protrude above the main plate 15b of the horizontal cross-piece 15. The head portions of the supporting strips 33c are inserted into the slits 17h of the guiding support member 17 such that the guiding support member 17 is placed on the main plate 15b of the horizontal cross-piece 15. Then, the perforated hole 17g of the guiding support member 17 is overlapped with the screw hole 33d of the mounting fitting 33 with the T-shaped hole 15d of the horizontal cross-piece 15 interposed therebetween. The bolts 34 are screwed and fastened to the screw hole 33d of the mounting fitting 33 through the perforated hole 17g of the guiding support member 17 and the T-shaped hole 15d of the horizontal cross-piece 15. Thereby, the guiding support member 17 is fixed onto the main plate 15b of the horizontal cross-piece 15.

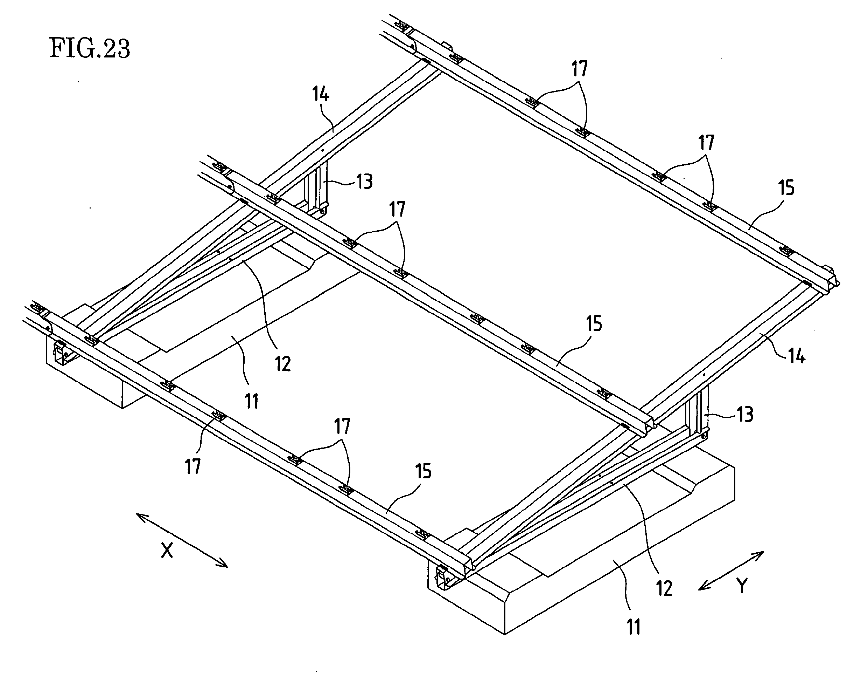

In the manner described above, the concrete foundation 11, the base cross-piece 12, the arm 13, the vertical cross-piece 14, the horizontal cross-piece 15, and the guiding support member 17 are assembled, and, thereby, a main structure of the mount as shown in FIG. 23 is formed. In FIG. 23, the concrete foundations 11 are laid, and a triangular structure made up of the base cross-piece 12, the arm 13, and the vertical cross-piece 14 is formed on each concrete foundation 11. Three horizontal cross-pieces 15 are disposed on each vertical cross-piece 14 in a bridging manner, and a plurality of the guiding support members 17 are fixed onto each horizontal cross-piece 15 with an interval.

Next, a description will be given of the support of the solar cell module 16 using the guiding support member 17 on the horizontal cross-piece 15.

As can be clearly seen from FIGS. 20 and 21, the fitting grooves 17d on the opposite sides of the guiding support member 17 are disposed parallel to the horizontal cross-piece 15, and a gap is formed between the hooking portion 17e (see FIG. 16) of each of the fitting grooves 17d and the main plate 15b of the horizontal cross-piece 15. Then, the fitting portion 19c of the tension bar 19 of the solar cell module 16 enters the fitting groove 17d through the gap between the hooking portion 17e of the fitting groove 17d and the main plate 15b of the horizontal cross-piece 15, and, thus, the fitting portion 19c of the tension bar 19 is fitted into the fitting groove 17d.

Further, the side plate 19b of the tension bar 19 abuts the stopper 17f of the guiding support member 17, and the abutting portion 19d of the tension bar 19 abuts the main plate 15b and the side plate 15a of the horizontal cross-piece 15 (a corner portion of the horizontal cross-piece 15).

An end of the tension bar 19 is supported as a result of the fitting portion 19c of the tension bar 19 fitting into the fitting groove 17d of the guiding support member 17 in this way, and, thereby, an end of the solar cell module 16 is supported on the main plate 15b of the horizontal cross-piece 15. Further, the side plate 19b of the tension bar 19 abuts the stopper 17f of the guiding support member 17, and the abutting portion 19d of the tension bar 19 to abut a corner portion of the horizontal cross-piece 15. Thereby, the solar cell module 16 is positioned. Moreover, the abutment of the side plate 19b of the tension bar 19 against the stopper 17f of the guiding support member 17 prevents the tension bar 19 from sliding, which makes it possible to also prevent the solar cell module 16 from sliding.

As shown in FIGS. 1 and 23, all the horizontal cross-pieces 15 have the same arrangement positions of the guiding support members 17 on the horizontal cross-piece 15. Namely, the first guiding support members 17 on the horizontal cross-pieces 15 are aligned in the Y direction, and the second guiding support members 17 on the horizontal cross-pieces 15 are aligned in the Y direction. Similarly, the nth guiding support members 17 on the horizontal cross-pieces 15 are aligned in the Y direction. Further, the pitch between the first and second guiding support members 17 is set to be the same as the pitch between the two tension bars 19 of each solar cell module 16, and the pitch between the third and fourth guiding support members 17 is set to be the same as the pitch between the two tension bars 19 of each solar cell module 16. Similarly, the pitch between an odd-numbered guiding support member 17 and an even-numbered guiding support member 17 is set to be the same as the pitch between the two tension bars 19 of each solar cell module 16. That is to say, the guiding support members 17 are positioned in all of the horizontal cross-pieces 15 such that ends of the two tension bars 19 of each solar cell module 16 can be supported by an odd-numbered guiding support member 17 and an even-numbered guiding support member 17.

Further, the pitch between the second and third guiding support members 17 and the pitch between the fourth and fifth guiding support members 17, or in other words, the pitch between an odd-numbered guiding support member 17 and an even-numbered guiding support member 17 is set to be substantially the same as or slightly wider than the pitch between the tension bars 19 of two solar cell modules 16 disposed adjacent to each other. This makes it possible to arrange solar cell modules 16 side by side, with almost no gap provided between two adjacent solar cell modules 16.

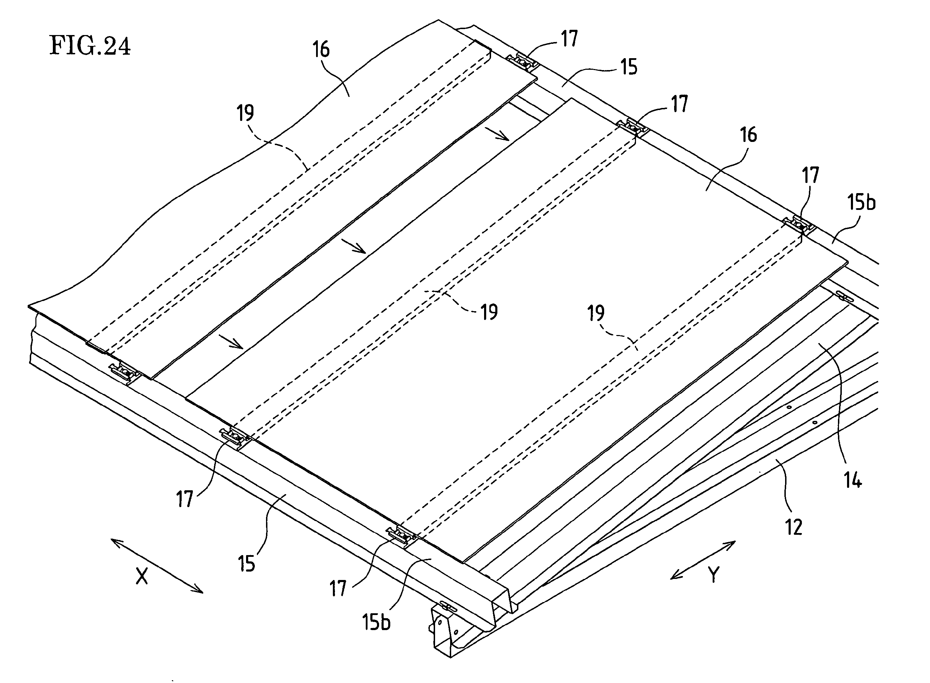

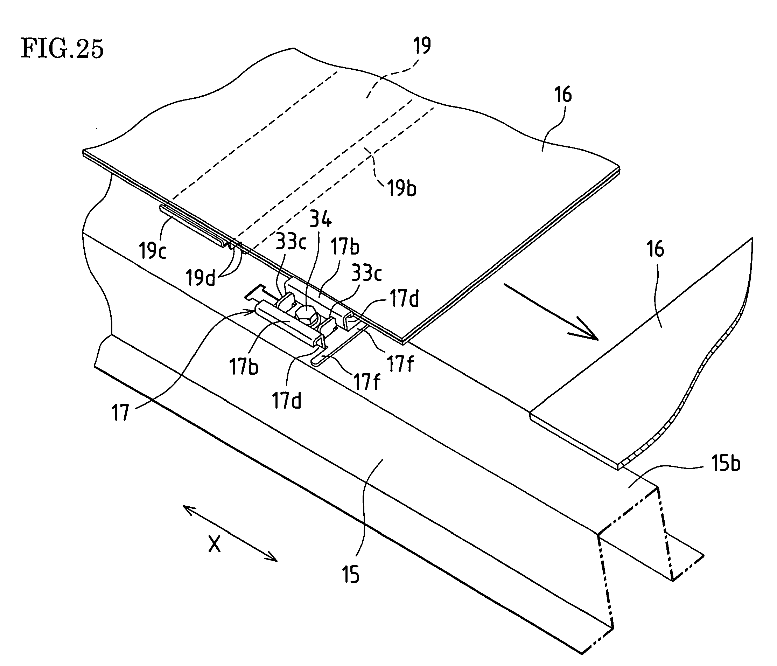

Here, in order to insert the fitting portion 19c of the tension bar 19 into the fitting groove 17d of the guiding support member 17, end of the tension bar 19 of the solar cell module 16 is disposed outside of the guiding support member 17 of the horizontal cross-piece 15, and placed on the main plate 15b of the horizontal cross-piece 15 as shown in FIGS. 24 and 25. Then, as shown in FIG. 21, the abutting portion 19d of the tension bar 19 is abutted to the main plate 15b and the side plates 15a of the horizontal cross-piece 15 (a corner portion of the horizontal cross-piece 15). As a result of this abutment, fitting portion 19c of the tension bar 19 is positioned with respect to the corner portion of the horizontal cross-piece 15, and, consequently, the fitting portion 19c of the tension bar 19 overlaps the fitting groove 17d of the guiding support member 17 when viewed in the X direction.

In this state, as the abutting portion 19d of the tension bar 19 is slid along the main plate 15b and the side plate 15a of the horizontal cross-piece 15 by sliding the solar cell module 16 in the X direction as shown in FIGS. 24 and 25, the fitting portion 19c of the tension bar 19 slides into the fitting groove 17d of the guiding support member 17 from one open end of the fitting groove 17d, and fits into the fitting groove 17d of the guiding support member 17. Furthermore, the fitting portion 19c of the tension bar 19 abuts the stopper 17f located at the other end of the fitting groove 17d of the guiding support member 17.

As a result, an end of the solar cell module 16 is supported on the main plate 15b of the horizontal cross-piece 15. Also, the side plate 19b of the tension bar 19 abuts the stopper 17f of the guiding support member 17, and the abutting portion 19d of the tension bar 19 abuts the corner portion of the horizontal cross-piece 15. Thereby, the solar cell module 16 is positioned. Furthermore, the abutment of the side plate 19b of the tension bar 19 against the stopper 17f of the guiding support member 17 prevents the tension bar 19 from sliding (sliding in the direction of descending order of the arrangement of the solar cell modules 16) and also prevents the solar cell modules 16 from sliding in the direction of descending order of their arrangement.

In the lower horizontal cross-piece 15 and the middle horizontal cross-piece 15 shown in FIG. 1, the tension bars 19 of the rightmost (first) solar cell module 16 are disposed outside, at their opposite ends, from the first and second guiding support members 17 of the horizontal cross-piece 15, and the opposite ends of each of the tension bars 19 of the solar cell module 16 are placed on the horizontal cross-pieces 15, respectively. At this time, under the self weight of the solar cell module 16, the abutting portion 19d of each tension bar 19 that is located downward in the direction of inclination of the solar cell module 16 abuts a corner portion of the lower horizontal cross-piece 15. As a result of this abutment, the fitting portion 19c of each of the tension bars 19 at one end located downward in the direction of inclination overlaps the fitting groove 17d of the guiding support member 17 of the lower horizontal cross-piece 15 when viewed in the X direction.

Also, the interval between the horizontal cross-pieces 15 is previously adjusted such that the spacing distance between the fitting grooves 17d of the guiding support members 17 on the horizontal cross-pieces 15 is the same as the spacing distance between the fitting portions 19c located at the opposite ends of the tension bar 19. This adjustment can be performed at the time of fixing the horizontal cross-pieces 15 using the mounting fittings 31 as described above. In this case, when the abutting portion 19d of each tension bar 19 that is located downward in the direction of inclination of the solar cell module 16 abuts a corner portion of the lower horizontal cross-piece 15, the fitting portion 19c of each tension bar 19 at the other end located upward in the direction of inclination also overlaps the fitting groove 17d of the guiding support member 17 of the middle horizontal cross-piece 15 when viewed in the X direction.

In this state, as shown in FIGS. 24 and 25, the fitting portions 19c located at the opposite ends of each tension bar 19 are inserted and fitted into the fitting grooves 17d of the guiding support members 17 on the horizontal cross-pieces 15 by sliding the solar cell module 16 in the X direction such that the fitting portions 19c are abutted against the stoppers 17f, and, thereby, opposite ends of the solar cell module 16 are supported on the horizontal cross-pieces 15 in a bridging manner.

At the time of the sliding of the solar cell module 16, as shown in FIG. 21, the abutting portion 19d of the tension bar 19 that is located downward in the direction of inclination of the solar cell module 16 remains abutting a corner portion of the lower horizontal cross-piece 15. Accordingly, the downward and horizontal movements of the abutting portion 19d of the tension bar 19 are restricted, and therefore the solar cell module 16 is prevented from slipping off under its weight downward in the direction of inclination, making it possible to ensure safety of the operation.

Note that, as can be clearly seen from FIG. 21, an allowance is provided between the fitting portion 19c of the tension bar 19 and the fitting groove 17d of the guiding support member 17. Therefore, no problem is caused by a slight positional shift of the fitting portion 19c of the tension bar 19 relative to the fitting groove 17d of the guiding support member 17.

Subsequently, according to the same procedure, the fitting portions 19c at opposite ends of the tension bars 19 of the second solar cell module 16 are inserted and fitted into the fitting grooves 17d of the guiding support members 17 on the horizontal cross-pieces 15 such that the fitting portions 19c are abutted against the stoppers 17f, and opposite ends of the solar cell module 16 are supported on the horizontal cross-pieces 15. Similarly, the third, fourth, and further solar cell modules 16 are supported on the horizontal cross-pieces 15 in a bridging manner, and the solar cell modules 16 in the lower (first) row are arranged side by side between the lower horizontal cross-piece 15 and the middle horizontal cross-piece 15.

In the middle horizontal cross-piece 15 and the upper horizontal cross-piece 15 shown in FIG. 1 as well, opposite ends of the tension bars 19 of the solar cell modules 16 are fitted to the guiding support members 17 on the horizontal cross-pieces 15 by placing opposite ends of the tension bars 19 of the rightmost (first) solar cell module 16 on the main plates 15b of the horizontal cross-pieces 15 and sliding them in the X direction. Thereby, opposite ends of the solar cell module 16 are supported on the horizontal cross-pieces 15 in a bridging manner. Then, the second, third, and further solar cell modules 16 are also supported on the horizontal cross-pieces 15 in a bridging manner according to the same procedure, and the solar cell modules 16 in the upper (second) row are arranged side by side between the middle horizontal cross-piece 15 and the upper horizontal cross-piece 15.

At this time, the guiding support members 17 on the middle horizontal cross-piece 15 support both the solar cell modules 16 in the lower (first) row and the solar cell modules 16 in the upper (second) row. The fitting grooves 17d on opposite sides of each guiding support member 17 face the solar cell modules 16 in the lower (first) raw and the solar cell modules 16 in the upper (second) row, respectively. The fitting portion 19c of each tension bar 19 that is at an end located upward in the inclination in the lower (first) row fits into the fitting groove 17d on one side of each guiding support member 17. The fitting portion 19c of each tension bar 19 that is at an end located downward in the direction of inclination in the upper (second) row fits into the fitting groove 17d on the other side of the guiding support member 17.

Further, in both the lower (first) row and the upper (second) row, the pitch between an odd-numbered guiding support member 17 and an even-numbered guiding support member 17 is set to be substantially the same as or slightly wider than the pitch between the tension bars 19 of two solar cell modules 16 disposed adjacent to each other. Therefore, it is possible to arrange the solar cell modules 16 side by side, with almost no gap provided between two adjacent solar cell modules 16.

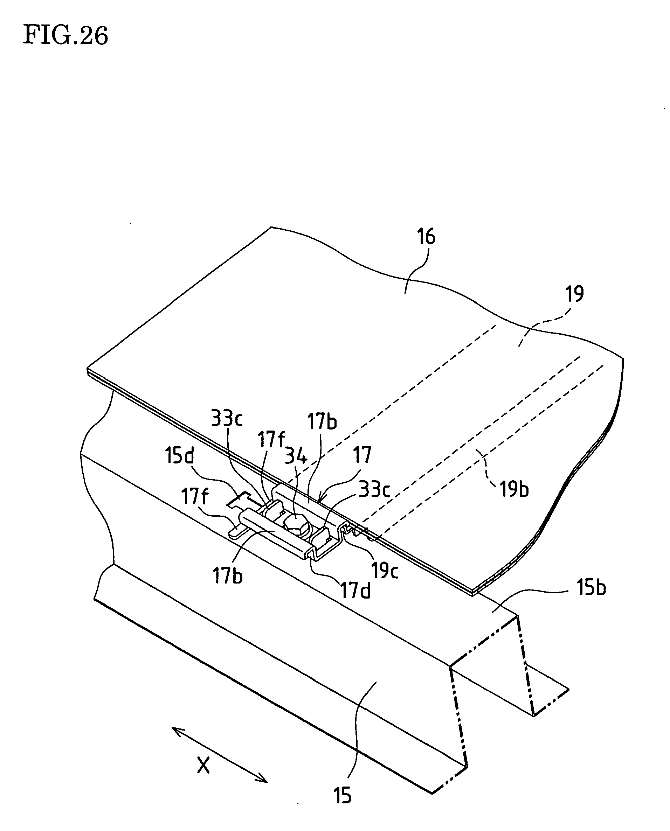

As for the final solar cell module 16, as shown in FIG. 26, the final guiding support member 17 on the horizontal cross-piece 15 is temporarily removed, and the guiding support member 17 is reversed left to right. Thereafter, the guiding support member 17 is fixed again onto the horizontal cross-piece 15, and the end of the tension bar 19 is supported by fitting the fitting portion 19c of the tension bar 19 into the fitting groove 17d of the guiding support member 17. In this case as well, the tension bar 19 is prevented from sliding by causing the side plate 19b of the tension bar 19 to abut the stopper 17f of the guiding support member 17. However, since the guiding support member 17 is reversed left to right, the direction in which the sliding is prevented is the direction of ascending order of the arrangement of the solar cell modules 16. Accordingly, the final solar cell module 16 is prevented from sliding in the direction of the ascending order. For all of the horizontal cross-pieces 15, the final guiding support member 17 is reversed left to right and fixed, and, thereby, the final solar cell module 16 is prevented from sliding in the direction of the ascending order.

When the final solar cell module 16 is prevented from sliding in the direction of the ascending order in this way, the solar cell modules 16 are arranged side by side without a gap as described above. Therefore, the solar cell modules 16 can be prevented from sliding in the direction of the ascending order. Accordingly, for all the solar cell modules 16, the fitting portion 19c of each tension bar 19 cannot be pulled out from the fitting groove 17d of the guiding support member 17 by sliding the solar cell module 16 in the direction of the ascending order, and, thus, the solar cell module 16 cannot be removed. The solar cell modules 16 cannot be slid in the direction of the descending order because the solar cell modules 16 are prevented from sliding in the direction of the descending order by the stoppers 17f of the guiding support members 17 preceding the last guiding support member 17.

Therefore, when a plurality of solar cell modules 16 are arranged side by side, spanning between the horizontal cross-pieces 15, then the final guiding support member 17 on each horizontal cross-piece 15 is temporarily removed, the guiding support member 17 is reversed left to right, the guiding support member 17 is fixed again on the corresponding horizontal cross-piece 15, an end of the tension bar 19 is supported by the guiding support member 17, and the final solar cell module 16 is prevented from sliding in the direction of the ascending order, it is impossible to remove the solar cell module 16. That is to say, the solar cell modules 16 cannot be slid in either in the direction of the ascending order or the direction of the descending order.

However, the guiding support member 17 is fixed to the horizontal cross-piece 15 with the mounting fitting 33 and the bolt 34, and the guiding support member 17 can be removed by unscrewing the bolt 34. Accordingly, the solar cell module 16 can be removed by removing the four guiding support members 17 supporting opposite ends of the tension bars 19 of the solar cell module 16. Therefore, when the replacement or maintenance of any of the solar cell modules 16 is necessary, it is possible to remove only that solar cell module 16.

Thus, according to the present embodiment, a plurality of solar cell modules 16 can be arranged side by side, spanning between the horizontal cross-piece 15, by repeating, for each of the solar cell modules 16, the operation of disposing the solar cell module 16, spanning between the horizontal cross-pieces 15, and inserting and fitting the fitting portions 19c on opposite ends of each tension bar 19 of the solar cell module 16 into the fitting grooves 17d of the guiding support members 17 on the horizontal cross-piece 15 by sliding the solar cell module 16 such that the fitting portions 19c are abutted against the stoppers 17f.

Further, since the abutting portion 19d of each tension bar 19 that is located downward in the direction of inclination of the solar cell module 16 abuts a corner portion of the lower horizontal cross-piece 15, the solar cell module 16 will not slip off, and, thus, the operation safety can be ensured.

If the guiding support members 17 are fixed onto the horizontal cross-pieces 15 before shipment from the factory, then there is almost no need to use a tool during the operation of installing the solar cell modules 16 such that they are disposed, spanning between the horizontal cross-pieces 15, and it is therefore possible to improve the working efficiency.

Since the fitting grooves 17d are provided on opposite sides of the guiding support members 17, the guiding support members 17 on the middle horizontal cross-piece 15 can support both the solar cell modules 16 in the lower (first) row and the solar cell modules 16 in the upper (second) row. Moreover, since the fitting grooves 17d are provided with the respective stoppers 17f, the direction of sliding of the solar cell modules 16 that is prevented by the stoppers 17f of the guiding support members 17 can be reversed by reversing the guiding support members 17 left to right and then fixing the guiding support members 17 onto the horizontal cross-pieces 15 again.

Even if the solar cell modules 16 are arranged side by side without a gap, any of the solar cell modules 16 can be removed by removing the guiding support members 17, and it is therefore possible to perform maintenance or replacement of any of the solar cell modules 16.

When attention is focused only on the horizontal cross-piece 15, as can be clearly seen from FIG. 21, the T-shaped holes 15d of the horizontal cross-piece 15 are formed on the center line of the main plate 15b of the horizontal cross-piece 15, and the guiding support members 17 are fixed on the center line of the main plate 15b of the horizontal cross-piece 15. Accordingly, when a wind pressure or a snow load is applied to the solar cell modules 16, a force resulting from the wind pressure or the snow load acts almost evenly with respect to the center line of the horizontal cross-piece 15. This increases the load resistance of the horizontal cross-piece 15.

Even if a force resulting from a wind pressure or a snow load acts on a one-sided location with respect to the center line of the horizontal cross-piece 15, a large twisting force acts on the horizontal cross-piece 15, resulting in a reduction in the strength of the horizontal cross-piece 15.

However, more precisely, a force resulting from a wind pressure or a snow load does not act on the center line of the horizontal cross-piece 15 with accuracy. According to the present embodiment, even if the guiding support member 17 is fixed to the bolt 34 located on the center line of the horizontal cross-piece 15, a force resulting from a wind or snow load can be received by the fitting groove 17d of the guiding support portion 17 (and the fitting portion 19c of each tension bar 19) that is located off the center line of the horizontal cross-piece 15. Thus, such force acts between the fitting groove 17d (and the fitting portion 19c) and the bolt 34. Accordingly, even if such force acts on a location slightly off the center line of the horizontal cross-piece 15 and the force twisting the horizontal cross-piece 15 can be thereby suppressed, it cannot be said that such force will not occur at all.

The present embodiment, however, has a structure in which the abutting portions 19d at opposite ends of each tension bar 19 of the solar cell panel 16 abut a corner of the horizontal cross-piece 15, and therefore, the abutting portions 19d at opposite ends of the tension bar 19 serve to hold down the above-described force of twisting the horizontal cross-piece 15. Accordingly, the tension bars 19 have the function of reinforcing the horizontal cross-pieces 15 or the mount.

That is to say, the tension bars 19 are used not only as a component of the solar cell module 16, but also as a component of the mount. This makes it possible to achieve a significant reduction in the number of parts and the costs of the solar photovoltaic system.

On the other hand, the strength of the solar cell panel 18 substantially corresponds to the strength of a glass plate, which has a small thickness relative to its area. Therefore, when a force resulting from a wind or snow load is applied to the solar cell panel 18, there is the possibility that the solar cell panel 18 may be bent and thus broken, which needs to be prevented.

Conventionally, a frame is provided so as to surround the four edges of a solar cell panel to form a solar cell module, and the bending and breaking of the solar cell panel is prevented using a drag of the frame. Also, for the type of a solar cell module provided with no frame, a method has been adopted in which any bending force applied to the solar cell panel is reduced by decreasing the area of each solar cell panel.

In contrast, according to the present embodiment, the solar cell panel 18 will not be significantly bent or broken because two tension bars 19 exert a drag on a force acting to bend the solar cell panel 18 about an imaginary axis in the X direction (shown in FIG. 1), and the horizontal cross-pieces 15 supporting opposite ends of the two tension bars 19 exert a drag on a force acting to bend the solar cell panel 18 about an imaginary axis in the Y direction (shown in FIG. 1).

That is to say, the tension bars 19 not only serve as a component of the solar cell module 16, but also serve a part of the function of the mount on which the solar cell module 16 is installed.

Thus, the tension bars 19 have the function of holding down the force acting to twist the horizontal cross-pieces 15 by the abutting portions 19d on opposite ends thereof abutting a corner of the horizontal cross-pieces 15, and the function of preventing, together with the horizontal cross-pieces 15, the bending and the breaking of the solar cell panel 18. Accordingly, the tension bars 19 are not only a component of the solar cell module 16, but also a component of the mount.

Therefore, according to the present embodiment, it is possible to reduce the number of parts serving redundant functions in the solar photovoltaic system, thus achieving a significant reduction in the number of parts and the costs of the solar photovoltaic system, compared with conventional solar cell modules and their mounts.

Furthermore, the present embodiment has a structure in which opposite ends of each tension bar 19 of the solar cell modules 16 are supported on the horizontal cross-pieces 15 in a bridging manner, and rows of the solar cell modules 16 can be supported above and below, respectively, the middle horizontal cross-piece 15. Accordingly, the number of the horizontal cross-pieces 15 can be suppressed to equal to or less than the number of rows of the solar cell modules 16, making it possible to achieve a further reduction in the number of parts, the number of installation steps, and the costs of the solar photovoltaic system.

Further, the height of the fitting portion 19c of the tension bar 19 (the height L1 in FIG. 4(b)) and the height of the hooking portion 17e of the fitting groove 17d of the guiding support member 17 (the height L2 in FIG. 17(a)) are set to be low. Accordingly, even if a force acting to pull the fitting portion 19c of the tension bar 19 from the fitting groove 17d of the guiding support member 17 act on the fitting portion 19c and the hooking portion 17e, the fitting portion 19c and the hooking portion 17e do not easily deform in such a manner that they collapse. Thus, the supporting strength between the fitting portion 19c of the tension bar 19 and the fitting groove 17d of the guiding support member 17 is high.

While a preferred embodiment of the present invention has been described above with reference to the accompanying drawings, it should be appreciated that the present invention is not limited to the embodiment shown above. It will be apparent for a person skilled in the art that various modifications and variations may be made within the scope of the invention as defined in the appended claims, and those modifications and variations should be understood to be included within the technical scope of the present invention.

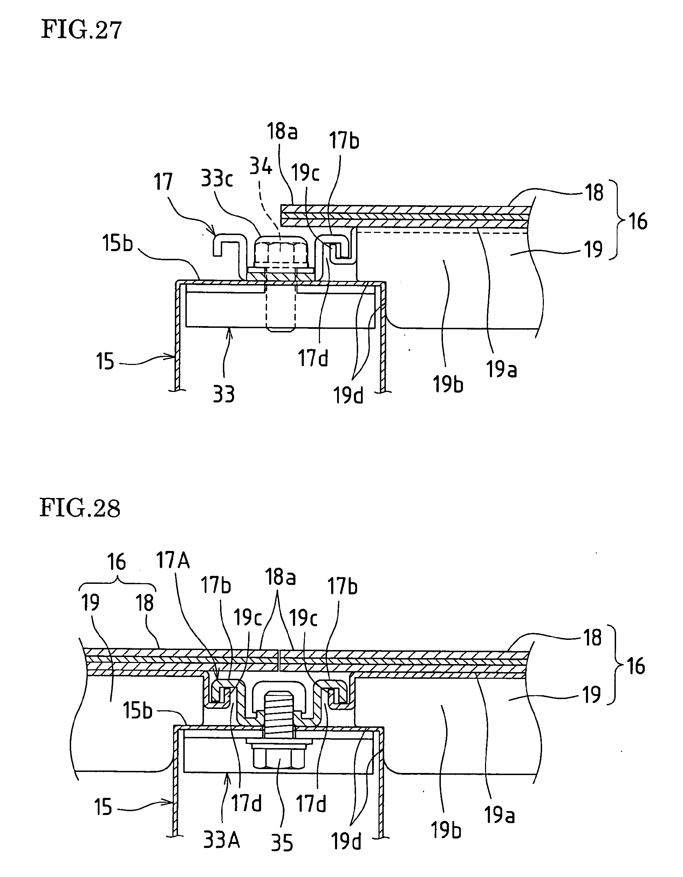

For example, as shown in FIG. 27, the fitting portion 19c may be formed below the top face of the main plate 19a of the tension bar 19 by bending an end of the tension bar 19 downward once and then folding it back upward. Then, an end portion 18a of the solar cell panel 18 on the main plate 19a of the tension bar 19 may be overhung above the guiding support member 17, and at least part of the guiding support member 17 may be concealed by the end portion 18a of the solar cell panel 18. Thereby, the guiding support member 17 is hardly exposed, making it possible to realize a desired appearance. It is also possible to increase the area occupied by the solar cell panel 18 relative to the installation area of the solar photovoltaic system, thus increasing the power generation efficiency.

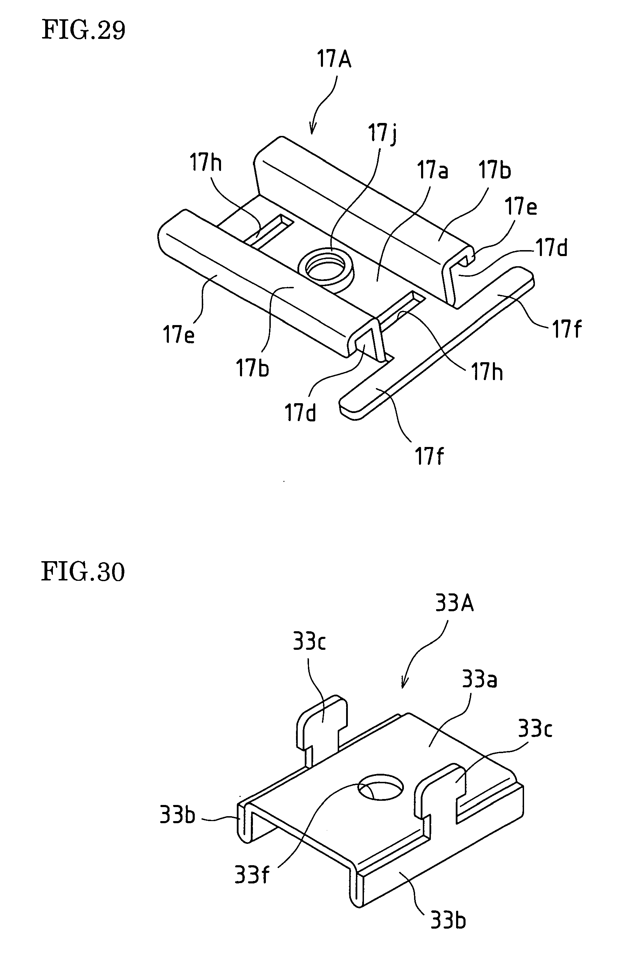

Further, as shown in FIG. 28, when one end of each of the tension bars 19 of the solar cell modules 16 in the lower (first) row and the solar cell modules 16 in the upper (second) row are supported on the middle horizontal cross-piece 15 and the end portions 18a of the solar cell panels 18 on the two sides are overhung, the end portions 18a of the solar cell panels 18 on the two sides cover the main plate 15b of the horizontal cross-piece 15, which makes it impossible to unscrew the bolt 34 and remove the guiding support member 17 as discussed above. Therefore, a guiding support member 17A as shown in FIG. 29 and a mounting fitting 33A as shown in FIG. 30 may be used to allow a bolt 35 to be removed from below.

In the guiding support member 17A shown in FIG. 29, a main plate 17a is provided with a screw hole 17j, instead of providing the main plate 17a with the perforated hole 17g as in the guiding support member 17 of FIG. 16. In the mounting fitting 33A shown in FIG. 30, a main plate 33a is provided with a perforated hole 33f, instead of providing the main plate 33a with the screw hole 33d as in the mounting fitting 33 of FIG. 18.

As can be clearly seen from FIG. 28, head portions of supporting strips 33c of the mounting fitting 33A are protruded above the main plate 15b of the horizontal cross-piece 15. The head portions of the supporting strips 33c are inserted into the respective corresponding slits 17h of the guiding support member 17A, so that the guiding support member 17A is disposed on the main plate 15b of the horizontal cross-piece 15. The screw hole 17j of the guiding support member 17A is overlapped with the perforated hole 33f of the mounting fitting 33A with the T-shaped hole 15d of the horizontal cross-piece 15 interposed therebetween. The bolt 35 is inserted from below the main plate 15b of the horizontal cross-piece 15, and screwed and fastened to the screw hole 17j of the guiding support member 17A through the perforated hole 33f of the mounting fitting 33A and the T-shaped hole 15d of the horizontal cross-piece 15, so that the guiding support member 17A is fixed onto the main plate 15b of the horizontal cross-piece 15. In this case, the bolt 35 can be easily removed from below the main plate 15b of the horizontal cross-piece 15. In addition, the operator does not need to get on the solar cell module 16 in order to perform the operation for fastening the bolt 35, which increases the operation safety.

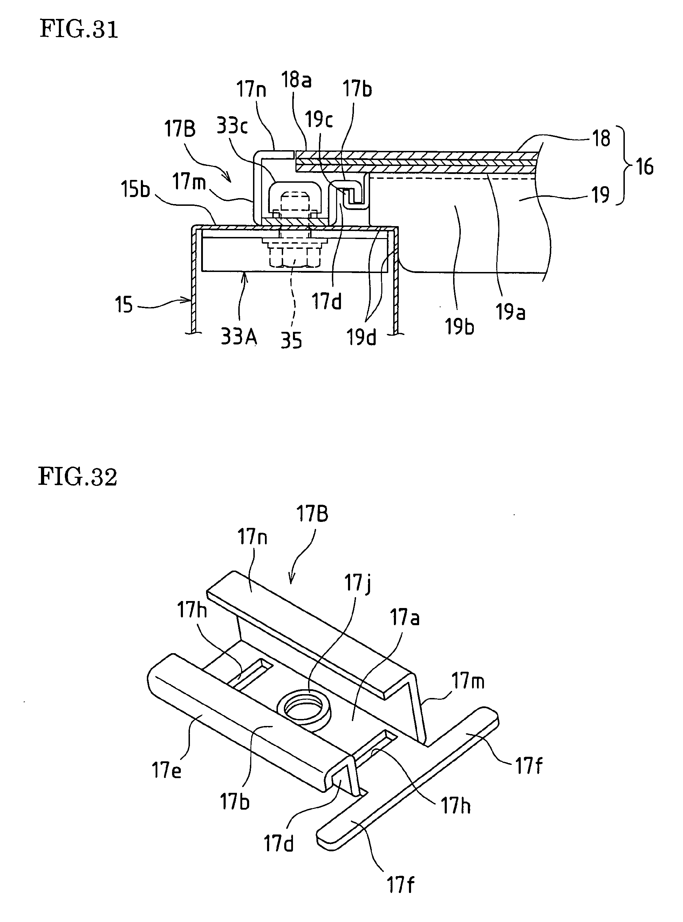

Moreover, as shown in FIG. 27, in the lower or upper horizontal cross-piece 15, the bolt 34 is exposed even if the end portion 18a of the solar cell panel 18 of the solar cell module 16 is overhung above the guiding support member 17 and half of the guiding support member 17 is thus concealed by the end portion 18a of the solar cell panel 18. Therefore, a guiding support member 17B may be used to conceal the bolt 35 as shown in FIG. 31.

As shown in FIG. 32, the guiding support member 17B is configured by providing a lateral portion 17b and a fitting groove 17d on one side of the main plate 17a, providing a side plate 17m and a cover plate 17n on the other side of the main plate 17a, and forming a screw hole 17j and slits 17h in the main plate 17a.

As can be clearly seen from FIG. 31, head portions of supporting strips 33c of the mounting fitting 33A are protruded above the main plate 15b of the horizontal cross-piece 15. The head portions of the supporting strips 33c are inserted into the respective corresponding slits 17h of the guiding support member 17B, so that the guiding support member 17B is disposed on the main plate 15b of the horizontal cross-piece 15. The bolt 35 is inserted from below the main plate 15b of the horizontal cross-piece 15, and screwed and fastened to the screw hole 17j of the guiding support member 17B through the perforated hole 33f of the mounting fitting 33A and the T-shaped hole 15d of the horizontal cross-piece 15, so that the guiding support member 17B is fixed onto the main plate 15b of the horizontal cross-piece 15.

In this state, the end portion 18a of the solar cell panel 18 of the solar cell module 16 is overhung above the guiding support member 17B and half of the guiding support member 17B is thus concealed by the end portion 18a of the solar cell panel 18. Further, the cover plate 17n of the guiding support member 17B is located above the remaining half of the guiding support member 17B and thus constitutes the remaining half of the appearance of the guiding support member 17B, and the bolt 34 is concealed by the cover plate 17n.

The bolt 35 can be easily removed from below the main plate 15b of the horizontal cross-piece 15, and, therefore, the operator does not need to get on the solar cell module 16 in order to perform the operation for fastening the bolt 35, which increases the operation safety.

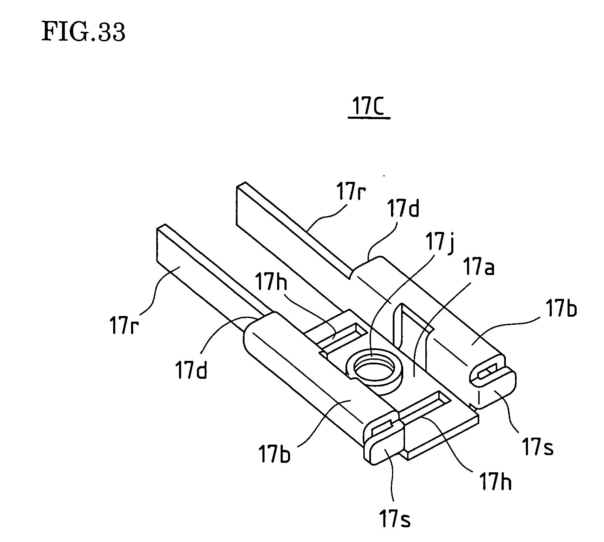

A guiding support member 17C as shown in FIG. 33 may be used. As shown in FIG. 33, the guiding support member 17C is configured by providing lateral portions 17b and fitting grooves 17d on opposite sides of a main plate 17a, forming positioning walls 17r by extending the inner walls of the lateral portions 17b, bending one end portion of each of the positioning walls 17r toward the corresponding fitting groove 17d, and providing the fitting grooves 17d with the respective stoppers 17s. A screw hole 17j and slits 17h are formed in the main plate 17a.

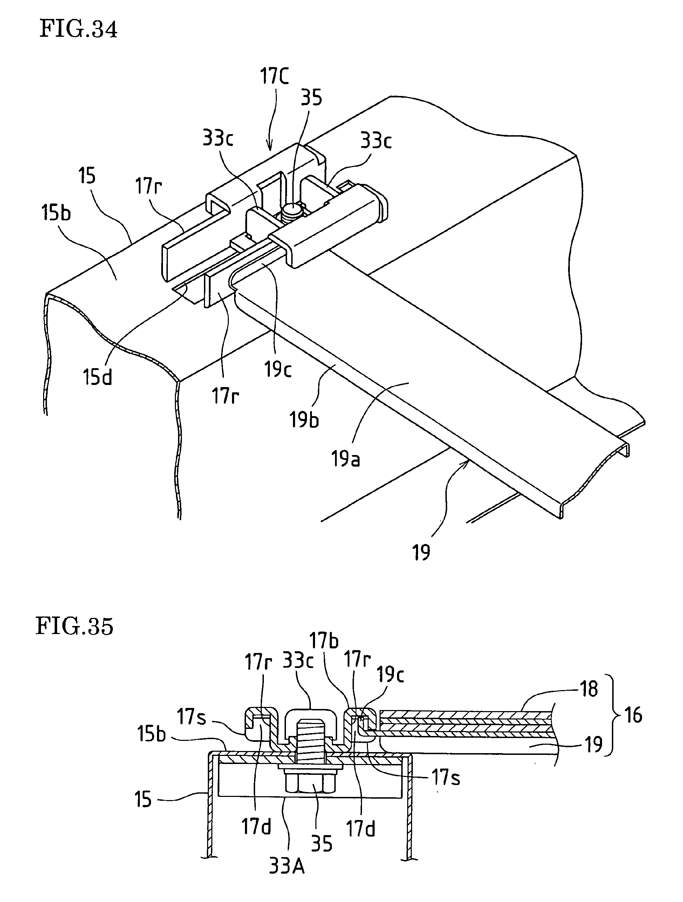

As shown in FIGS. 34 and 35, the head portions of the supporting strips 33c of the mounting fitting 33A are protruded above the main plate 15b of the horizontal cross-piece 15. The head portions of the supporting strips 33c are inserted into the slits 17h of the guiding support member 17C. The bolt 35 is inserted from below the main plate 15b of the horizontal cross-piece 15, and screwed and fastened to the screw hole 17j of the guiding support member 17C through the perforated hole 33f of the mounting fitting 33A and the T-shaped hole 15d of the horizontal cross-piece 15, so that the guiding support member 17C is fixed onto the main plate 15b of the horizontal cross-piece 15.

At an end of the main plate 19a of the tension bar 19, only the fitting portion 19c is provided , and the abutting portion 19d (shown in FIG. 3, etc.) is not formed.

In the case of using the guiding support member 17C configured in this manner, the fitting portion 19c of the tension bar 19 is abutted against the corresponding positioning wall 17r of the guiding support member 17C on the main plate 15b of the horizontal cross-piece 15. The fitting portion 19c of the tension bar 19 is inserted and fitted into the corresponding fitting groove 17d of the guiding support member 17C by sliding the fitting portion 19c of the tension bar 19 along the corresponding positioning wall 17r of the guiding support member 17C. Furthermore, a side plate 19b of the tension bar 19 is abutted against a stopper 17s of the corresponding fitting groove 17d, so that one end of the tension bar 19 is supported by the guiding support member 17C. Therefore, it is not necessary to cause an end of the tension bar 19 to abut the horizontal cross-piece 15.

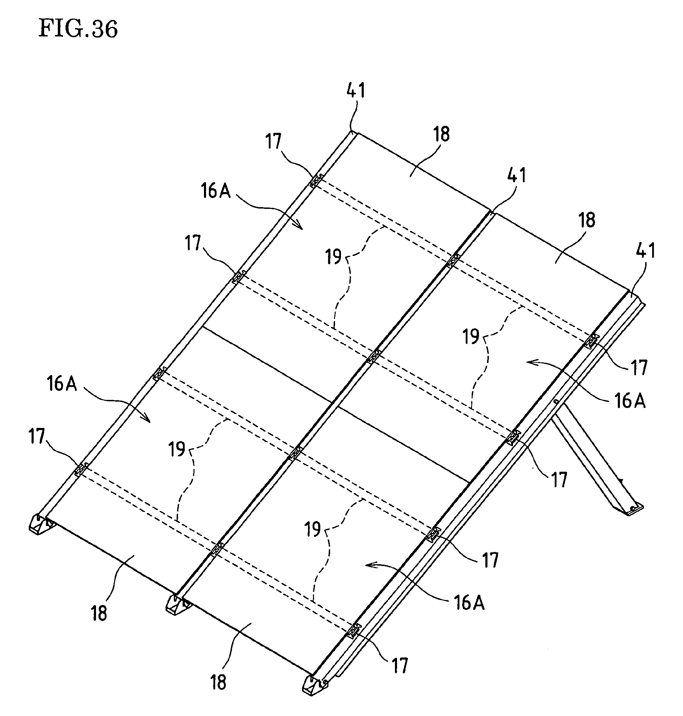

As shown in FIG. 36, three vertical cross-pieces 41 may be fixed in an inclined manner, two solar cell modules 16A may be arranged end to end and supported between the left vertical cross-piece 41 and the middle vertical cross-piece 41, and two solar cell modules 16A may be arranged end to end and supported between the right vertical cross-piece 41 and the middle vertical cross-piece 41.

The solar cell module 16A is configured by attaching, onto the underside of the solar cell panel 18, two tension bars 19 extending parallel to the short edges of the solar cell panel 18.

T-shaped holes 41a are formed in four locations of the top face of each vertical cross-piece 41, and the guiding support members 17 (shown in FIG. 16) are fixed at the locations of the T-shaped hole 41a using the mounting fittings 33 (shown in FIG. 18) and the bolts 34 (shown in FIG. 20). Also, each guiding support member 17 is disposed such that the fitting grooves 17d extend parallel to the vertical cross-piece 41 and the stoppers 17f are located at the lower end of the fitting grooves 7d.

The interval between the vertical cross-pieces 41 is set such that the abutting portions 19d at opposite ends of each tension bar 19 of the solar cell modules 16A abut against a corner portion of the vertical cross-pieces 41, and that the fitting portions 19c at opposite ends of the tension bar 19 of the solar cell modules 16A fit into the respective corresponding fitting grooves 17d of the guiding support members 17 on the vertical cross-pieces 41.

In all the solar cell modules 16A, opposite ends of each of the two tension bars 19 are disposed on the respective corresponding vertical cross-pieces 41 in a bridging manner, and the opposite ends of each tension bar 19 are disposed above the respective corresponding guiding support members 17 on the respective corresponding vertical cross-pieces 41. The opposite ends of each tension bar 19 are moved downward on the respective corresponding vertical cross-pieces 41, and the fitting portions 19c at the opposite ends of the tension bar 19 are inserted and fitted into the respective corresponding fitting grooves 17d of the guiding support members 17 of the vertical cross-pieces 41 Then, the side plates 19b at the opposite ends of the tension bar 19 are abutted against the respective corresponding stoppers 17f of the guiding support members 17, so that the solar cell modules 16A are supported by the vertical cross-pieces 41 without slipping off.

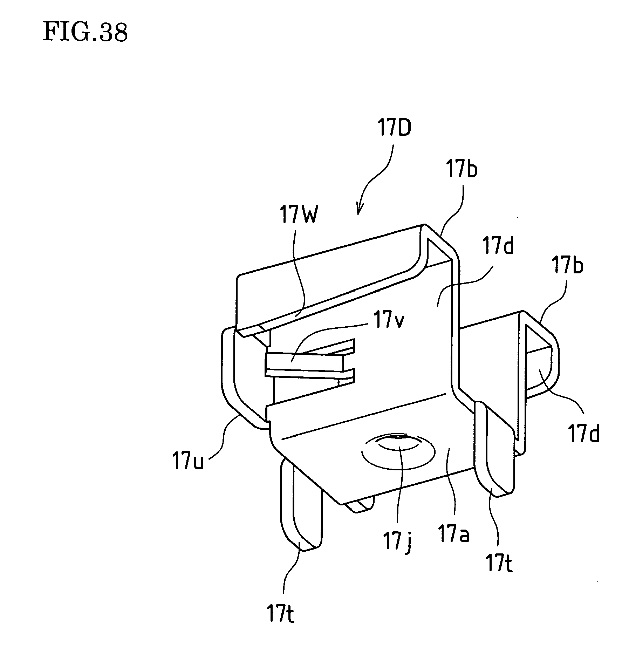

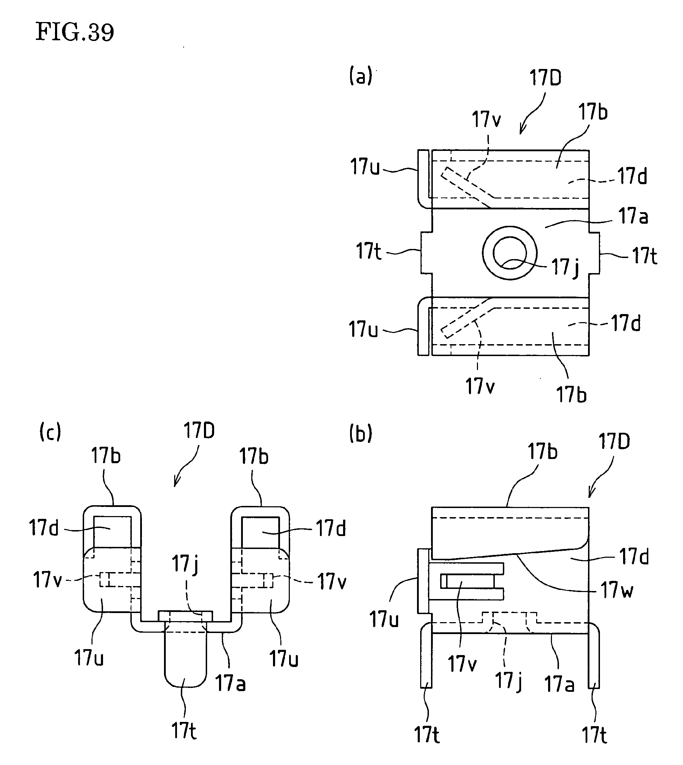

A guiding support member 17D as shown in FIGS. 38, 39(a), 39(b), and 39(c) may also be used. In the guiding support member 17D, a lateral portion 17b and a fitting groove 17d are provided at each of opposing edges of a main plate 17a, and a positioning piece 17t bent downward is provided at each of other opposing edges of the main plate 17a. Also, one end portion of the inner wall of each of the lateral portions 17b is extended, and the extended one end portion is bent outward to form a stopper 17u. Furthermore, a U-shaped notch is formed in the inner wall of each of the lateral portions 17b, and the inner portion of this notch is raised obliquely outward to form an elastic projection 17v. Also, a pressing lower edge 17w on the outer wall of each of the lateral portions 17b is inclined from the open one end portion of the fitting groove 17d toward the stopper 17u so as to become lower as approaching the main plate 15b of the horizontal cross-piece 15. Thereby, the interval between the pressing lower edge 17w and the main plate 15b of the horizontal cross-piece 15 toward the stopper 17u is smaller than the interval therebetween toward the open one end portion of the fitting groove 17d. A screw hole 17j is formed in the main plate 17a.

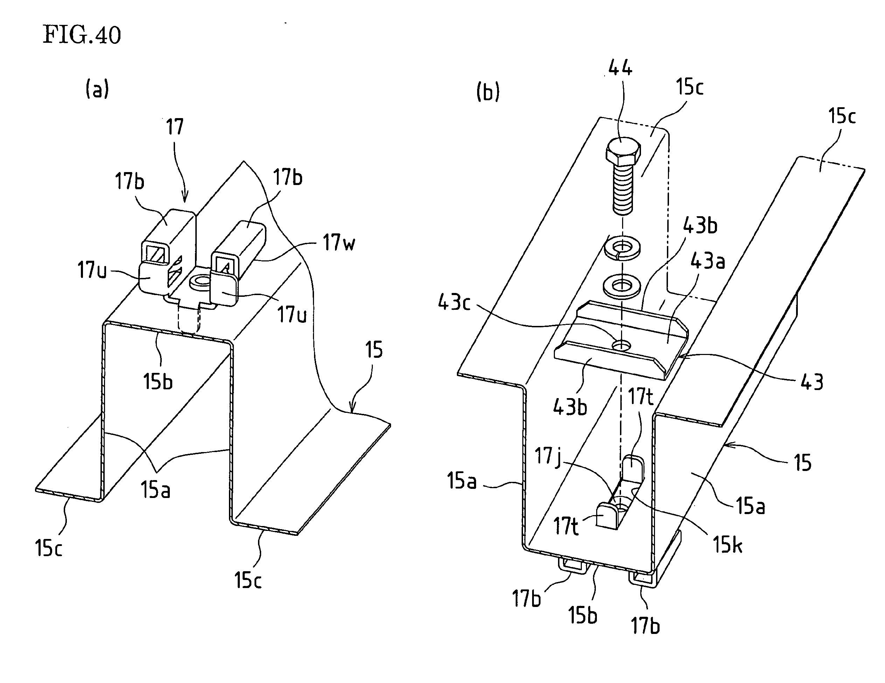

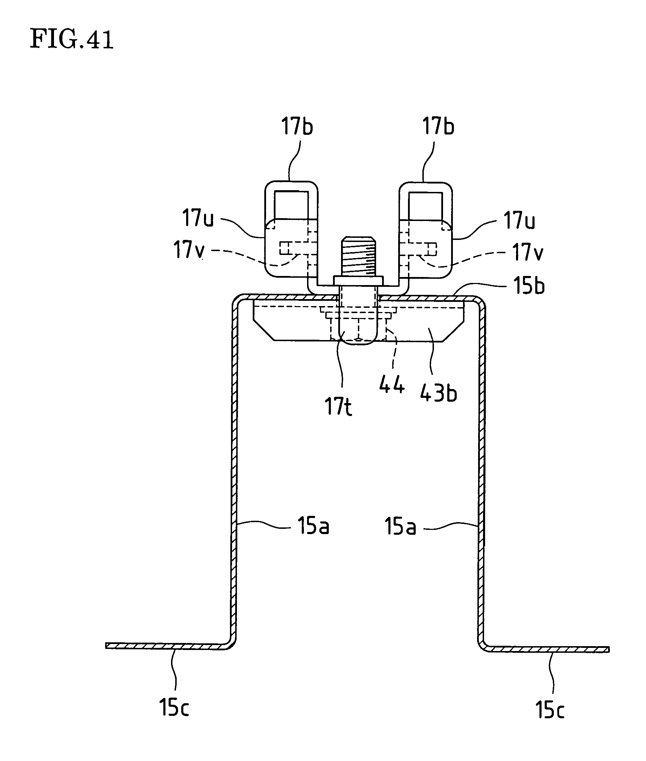

FIGS. 40(a), 40(b), and 41 are respectively a perspective view, an exploded perspective view, and a cross-sectional view showing a fixing structure for the guiding support member 17D. As shown in FIGS. 40 and 41, an elongated hole 15k is formed in the main plate 15b of the horizontal cross-piece 15. The positioning pieces 17t of the guiding support member 17D are inserted in the elongated hole 15k of the horizontal cross-piece 15, and the main plate 17a of the guiding support member 17D is placed on the main plate 15b of the horizontal cross-piece 15.

A reinforcement fitting 43 includes a main plate 43a and side plates 43b bent on opposite sides of the main plate 43a, and is disposed overlapping the lower face of the main plate 15b of the horizontal cross-piece 15. The side plates 43b of the reinforcement fitting 43 is made orthogonal to the side plates 15a of the horizontal cross-piece 15. The side plates 43b of the reinforcement fitting 43 are placed between the positioning pieces 17t of the guiding support member 17D that protrude downward from the elongated hole 15k of the horizontal cross-piece 15, and the main plate 43a of the reinforcement fitting 43 is overlapped with the lower face of the main plate 15b of the horizontal cross-piece 15. In this state, a bolt 44 is screwed and fastened to the screw hole 17j of the main plate 17a of the guiding support member 17D through a perforated hole 43c of the main plate 43a of the reinforcement fitting 43 and the elongated hole 15k of the horizontal cross-piece 15, so that the guiding support member 17D is fixed onto the main plate 15b of the horizontal cross-piece 15.

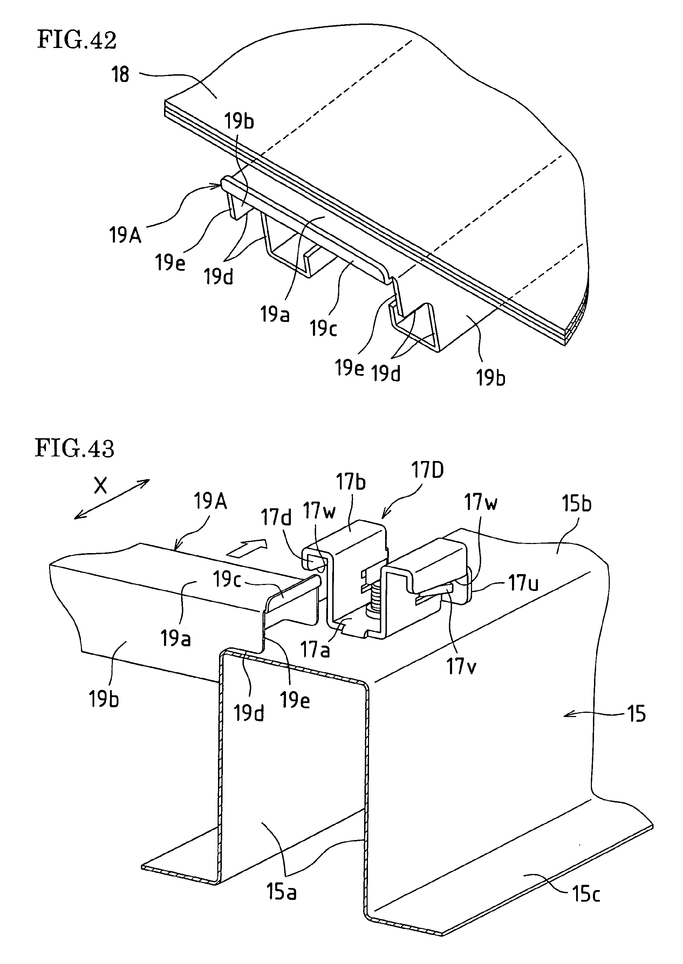

As shown in FIG. 42, the tension bar 19A of the solar cell panel 18 is formed by extending the lower edge of each of the side plates 19b of the tension bar 19 shown in FIGS. 3, 4(a) and 4(b), and bending the extended portion inward twice, thus increasing its strength.

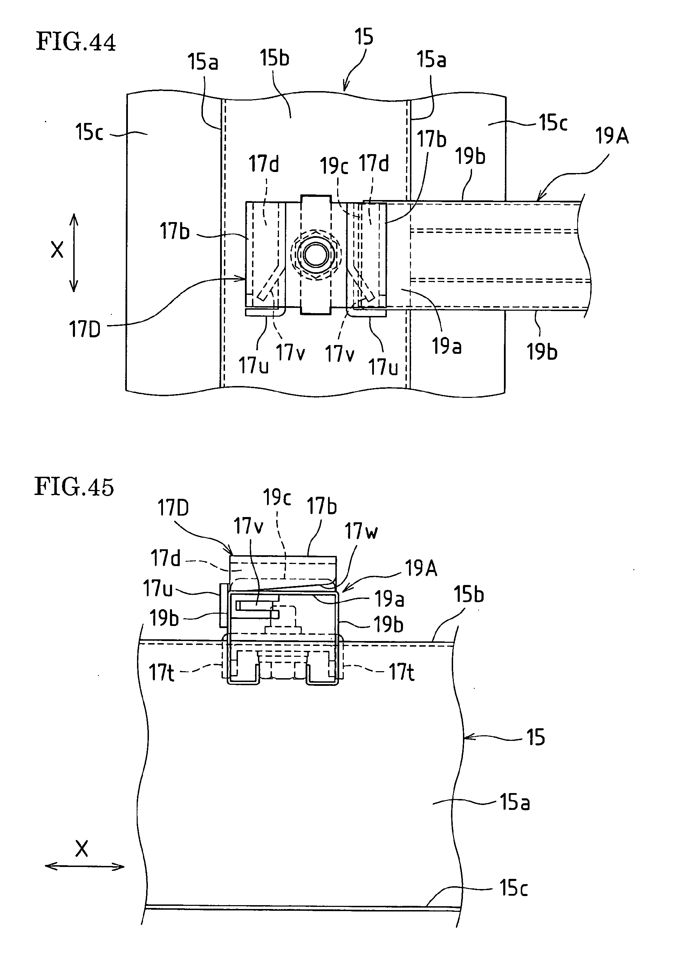

As shown in FIG. 43, an end of the tension bar 19A of the solar cell module 16 is disposed outside of the guiding support member 17D, and the abutting portions 19d of the tension bar 19A are abutted against a corner portion of the horizontal cross-piece 15. Then, as the solar cell module 16 is slid in the X direction, the fitting portion 19c of the tension bar 19A moves so as to enter the fitting groove 17d of the guiding support member 17D from one open end of the fitting groove 17d, and the fitting portion 19c of the tension bar 19A fits into the fitting groove 17d of the guiding support member 17D. In this case, an end edge 19e of the tension bar 19A collides with the elastic projection 17v raised from the inner wall of the lateral portion 17b of the guiding support member 17D. However, the elastic projection 17v is pushed down inward by the end edge 19e of the tension bar 19A and thus retracts. Therefore, the end edge 19e of the tension bar 19A keeps moving on the elastic projection 17v. Then, when the end edge 19e of the tension bar 19A has passed through the location of the elastic projection 17v, the elastic projection 17v rises as a result of returning to its original state by its elasticity as shown in FIG. 44. Furthermore, the side plate 19b of the tension bar 19A abuts the stopper 17u. When the elastic projection 17v has risen as a result of returning to its original state, the distal end of the elastic projection 17v is opposed to the side plate 19b of the tension bar 19A, and, thereby, the elastic projection 17v prevents the tension bar 19A from moving in the direction opposite to the direction in which the fitting portion 19c entered. Also, the stopper 17u prevents the tension bar 19A from moving in the direction in which the fitting portion 19c entered. Accordingly, the movement of the tension bar 19A in the X direction is prevented, and the movement of the solar cell module 16 in the X direction is also prevented.

As shown in FIG. 45, since the pressing lower edge 17w of the outer wall of the lateral portion 17b of the guiding support member 17D is inclined so as to become lower toward the stopper 17u, the spacing distance between the main plate 19a of the tension bar 19A and the pressing lower edge 17w of the outer wall of the lateral portion 17b gradually decreases as the fitting portion 19c of the tension bar 19A enters the fitting groove 17d of the guiding support member 17D from one open end of the fitting groove 17d. When the side plate 19b of the tension bar 19A abuts the stopper 17u, the main plate 19a of the tension bar 19A abuts the pressing lower edge 17w of the outer wall of the lateral portion 17b, and an end portion of the tension bar 19A is sandwiched between the main plate 15b of the horizontal cross-piece 15 and the pressing lower edge 17w of the outer wall of the lateral portion 17b, so that the end portion of the tension bar 19A is fixed. Consequently, the tension bar 19A is fixed, and the solar cell module 16 is also fixed.

Accordingly, the use of the guiding support member 17D can prevent the movement of the solar cell module 16 in the X direction, thus making it possible to position and fix the solar cell module 16 in a reliable manner.

In addition, the stopper of the guiding support member may be separate from the guiding support member, and the guiding support member or the stopper may be removably fixed onto the horizontal cross-piece.

### Industrial Applicability

The present invention is applicable not only to a solar cell module, but also to support other structural objects. For example, the invention may support, for example, a reflector panel used for solar thermal power generation, and is therefore very useful for constructing a solar thermal power generation system.

### Description of Reference Numerals

- 11: Concrete foundation
- 12: Base cross-piece
- 13: Arm
- 14: Vertical cross-piece
- 15: Horizontal cross-piece
- 16: Solar cell module
- 17: Guiding support member (guiding support portion, anti-sliding member)
- 17d: Fitting groove
- 17e: Hooking portion
- 17f: Stopper
- 18: Solar cell panel
- 19: Tension bar
- 19c: Fitting portion
- 19d: Abutting portion
- 21, 26, 32, 34: Bolt
- 22: Reinforcement fitting
- 25: Pipe
- 27: Nut
- 31, 33: Mounting fitting

## Claims

1. A structural object supporting structure that supports a structural object, comprising:
a cross-piece on which an end of the structural object is placed;
a guiding support portion disposed on the cross-piece; and
a stopper provided on one end side of the guiding support portion,
wherein the guiding support portion includes a fitting groove extending parallel to the cross-piece, and
the end of the structural object is provided with a fitting portion that is inserted into the fitting groove of the guiding support portion from one open end of the fitting groove to abut the stopper by being slid in the longitudinal direction of the cross-piece.

2. The structural object supporting structure according to claim 1,
wherein the stopper is provided in the guiding support portion.

3. The structural object supporting structure according to claim 1 or 2,
wherein the end of the structural object is provided with an abutting portion that abuts the cross-piece so as to position the fitting portion of the structural object with respect to the fitting groove of the guiding support portion.

4. The structural object supporting structure according to claim 3,
wherein the abutting portion abuts a corner portion of the cross-piece.

5. The structural object supporting structure according to claim 1 or 2,
wherein the guiding support portion is provided with a positioning wall against which the end of the structural object is abutted so as to position the fitting portion of the structural object with respect to the fitting groove of the guiding support portion.

6. The structural object supporting structure according to any one of claims 1 to 5,
wherein the fitting groove of the guiding support portion is provided with an elastic projection that comes into contact with and retracts from an end portion of the structural object inserted into the fitting groove so as to allow passage of the end portion of the structural object, and that returns after passage of the end portion of the structural object so as to prevent the end portion of the structural object from moving in a direction opposite to the direction in which the end portion was inserted.

7. The structural object supporting structure according to any one of claims 1 to 6,
wherein the fitting groove of the guiding support portion is provided with a pressing portion that, when an end portion of the structural object is slid into the fitting groove to be abutted against the stopper, causes the end portion of the structural object to be sandwiched between the cross-piece and the pressing portion, and
the pressing portion is shaped such that the interval between the pressing portion and the cross-piece toward the stopper is smaller than the interval between the pressing portion and the cross-piece toward one open end portion of the fitting groove.

8. The structural object supporting structure according to any one of claims 1 to 7,
wherein a pair of the fitting grooves extending parallel to each other are provided on opposite sides of the guiding support portion, first adjacent ends of the fitting grooves are respectively open, and second adjacent ends of the fitting grooves are provided with respective stoppers.

9. The structural object supporting structure according to any one of claims 1 to 8,
wherein the guiding support portion is provided at a position on the center line of the cross-piece.

10. The structural object supporting structure according to any one of claims 1 to 9,
wherein two cross-pieces are disposed parallel and at different heights, and respective guiding support portions are disposed on the cross-pieces, and
opposite ends of the structural object are disposed on the cross-pieces in a bridging manner, one of the ends of the structural object is abutted against the lower one of the cross-pieces so as to be slidable in the longitudinal direction of the cross-pieces, the opposite ends of the structural object are slid on the cross-pieces, and the fitting portions provided on the opposite ends of the structural object are inserted and fitted into the fitting grooves of the guiding support portions on the cross-pieces so as to be abutted against the stoppers.

11. The structural object supporting structure according to any one of claims 1 to 10,
wherein the guiding support portion includes a cover portion that covers at least half of the guiding support portion.

12. The structural object supporting structure according to any one of claims 1 to 11,
wherein the structural object includes a solar cell panel and a tension bar fixed to the underside of the solar cell panel, and the fitting portion is provided at an end of the tension bar.

13. The structural object supporting structure according to claim 12,
wherein an end portion of the solar cell panel overhangs above the guiding support portion supporting the end of the tension bar, and covers the guiding support portion.

14. The structural object supporting structure according to any one of claims 1 to 13, comprising:
a fastening member for removably fastening and fixing the guiding support portion onto the cross-piece,
wherein the fastening member is provided so as to be removable below the cross-piece.

15. A structural object mount that supports a structural object, comprising:
a cross-piece on which an end of the structural object is placed;
a guiding support portion disposed on the cross-piece; and
a stopper provided on one end side of the guiding support portion,
wherein the guiding support portion is provided with a fitting groove at least an end of which opposite to the stopper is open and that extends in the longitudinal direction of the cross-piece such that a part of the end of the structural object slidingly fits into the fitting groove in the longitudinal direction of the cross-piece to abut the stopper.

16. The structural object mount according to claim 15,
wherein an anti-sliding member is provided that prevents the structural object from sliding in a direction opposite to the direction in which the structural object abuts the stopper of the guiding support portion.

17. The structural object mount according to claim 15 or 16,
wherein the guiding support portion is removably fixed onto the cross-piece.

18. The structural object mount according to any one of claims 15 to 17, comprising:
a fastening member for removably fastening and fixing the guiding support portion onto the cross-piece,
wherein the fastening member is provided so as to be removable below the cross-piece.

19. The structural object mount according to any one of claims 15 to 18,
wherein a plurality of the cross-pieces are disposed parallel and at different heights, and respective guiding support portions are disposed on the cross-pieces, and
opposite ends of the structural object are disposed on the cross-pieces in a bridging manner, one of the ends of the structural object is abutted against the lower one of the cross-pieces so as to be slidable in the longitudinal direction of the cross-pieces, the opposite ends of the structural object are slid on the cross-pieces, and the fitting portions provided on the opposite ends of the structural object are inserted and fitted into the fitting grooves of the guiding support portions on the cross-pieces so as to be abutted against the stoppers.

20. The structural object mount according to any one of claims 15 to 19,
wherein the structural object includes a solar cell panel and a tension bar fixed to the underside of the solar cell panel, and the fitting portion and the abutting portion are provided at opposite ends of the tension bar.

21. A structural object mount that supports a plurality of structural objects, comprising:
a plurality of cross-pieces disposed parallel;
a plurality of guiding support portions disposed on the cross-pieces with an interval; and,
a stopper provided on one end side of each of the guiding support portions,
wherein each of the guiding support portions is provided with a fitting groove at least an end of which opposite to the stopper is open and that extends in the longitudinal direction of the cross-piece such that the fitting portion provided at the end of each of the structural objects slidingly fits into the fitting groove in the longitudinal direction of the cross-piece to abut the stopper.

22. The structural object mount according to claim 21,
wherein an anti-sliding member is provided that prevents the final structural object of the supported structural objects from sliding.

23. A method for installing a structural object using the structural object mount according to claim 21, comprising:
a sliding fitting step of disposing opposite ends of the structural object on the cross-pieces in a bridging manner, disposing the opposite ends of the structural object so as to be outside of the positions of the guiding support portions on respective cross-pieces, causing one of the ends of the structural object to be abutted against the lower one of the cross-pieces so as to be slidable in the longitudinal direction of the cross-pieces, causing the opposite ends of the structural object to slide on the cross-pieces, and inserting and fitting the fitting portions provided on the opposite ends of the structural object into the fitting grooves of the guiding support portions on the cross-pieces so as to be abutted against the stoppers,
wherein a plurality of the structural objects are sequentially arranged and supported on the cross-pieces by successively repeating the sliding fitting step for the plurality of the structural objects.

24. A solar photovoltaic system comprising a solar cell module, comprising:
a plurality of cross-pieces disposed parallel,
wherein the solar cell module includes a solar cell panel and a tension bar fixed parallel to one edge of the solar cell panel, and
opposite ends of the tension bar are supported on the plurality of cross-pieces in a bridging manner.

25. A solar photovoltaic system comprising a solar cell module, comprising:
a plurality of cross-pieces disposed parallel,
wherein the solar cell module includes a solar cell panel and a tension bar that is fixed paralled to one edge of the solar cell panel and spaced away from the edge, and
opposite ends of the tension bar are supported on the plurality of cross-pieces in a bridging manner.

26. A solar photovoltaic system comprising a solar cell module, comprising:
a plurality of cross-pieces disposed parallel,
wherein the solar cell module includes a solar cell panel and a tension bar fixed paralled to one edge of the solar cell panel,
opposite ends of the tension bar are supported on the plurality of cross-pieces in a bridging manner, and
at least one of the cross-pieces supports a plurality of solar cell modules on opposite sides of the direction in which the cross-piece extends.

27. A solar photovoltaic system comprising a solar cell module, comprising:
a plurality of cross-pieces disposed parallel,
wherein the solar cell module includes a solar cell panel and a tension bar fixed to the underside of the solar cell panel, and
opposite ends of the tension bar are supported on the plurality of cross-pieces in a bridging manner.

28. The solar photovoltaic system according to claim 27, comprising:
a guiding support portion disposed on the cross-piece; and
a stopper provided on one end side of the guiding support portion,
wherein the guiding support portion includes a fitting groove extending parallel to the cross-piece, and
the end of the tension bar is provided with a fitting portion that is inserted into the fitting groove of the guiding support portion from an open end of the fitting groove to abut the stopper on one end side of the fitting groove, and an abutting portion that abuts the cross-piece so as to position the fitting portion of the tension bar with respect to the fitting groove of the guiding support portion.
